# EUROPEAN PATENT APPLICATION

(11) **EP 4 765 657 A2**
(43) Date of publication of application: **24.06.2026**
(21) Application number: 26176395.7
(22) Date of filing: 07.12.2021
(51) Int. Cl.: H04B 7/024

(54) **BASE STATION AND COMMUNICATION METHOD**

(30) Priority: 22.02.2021 JP 2021026256
(62) Divisional of application: 21926751.5
(71) Applicant: Panasonic Intellectual Property Corporation of America, Torrance, CA 90504 (US)
(72) Inventor: NAKANO, Takayuki, Sendai-shi, Miyagi, 981-3206 (JP); IWAI, Takashi, Sendai-shi, Miyagi, 981-3206 (JP); URABE, Yoshio, Kadoma-shi, Osaka, 571-0057 (JP)
(74) Representative: Grünecker Patent- und Rechtsanwälte PartG mbB

(57) **Abstract**

A base station equipped with: a receiver circuit that receives control information pertaining to sharing channel state information during coordinated communication between base stations; and a control circuit that, on the basis of the control information, controls the transmission of the channel state information to another base station.

## Description

### Technical Field

The present disclosure relates to a base station and a communication method.

### Background Art

In the Institute of Electrical and Electronics Engineers (IEEE), studies have been carried out on the IEEE 802.11 be standard (hereinafter, also referred to as "11be") for the next generation radio local area network (LAN), which is the successor to the IEEE 802.11ax standard (hereinafter, also referred to as "11ax"). For example, IEEE 802.11ax is also referred to as High Efficiency (HE), and IEEE 802.11be is also referred to as Extremely High Throughput (EHT).

### Citation List

### Non Patent Literature

NPL 1
   IEEE 802.11-20/1935r15, Compendium of straw polls and potential changes to the Specification Framework Document - Part 2
NPL 2
   IEEE 802.11-19/1097r0, Sounding procedure in AP collaboration
NPL 3
   IEEE 802.11-19/1554r1, Data Sharing for Multi-AP Coordination
NPL 4
   IEEE P802.11ax/D8.0
NPL 5
   IEEE P802.11-REVmd/D5.0

### Summary of Invention

There is scope for further study, however, on sharing control at the time of coordinated communication in radio communication such as a wireless LAN.

One non-limiting and exemplary embodiment facilitates providing a base station and a communication method each capable of realizing appropriate sharing control in coordinated communication.

A base station according to an embodiment of the present disclosure includes: reception circuitry, which, in operation, receives control information on sharing of channel state information in inter-base-station coordinated communication; and control circuitry, which, in operation, controls transmission of the channel state information to another base station based on the control information.

It should be noted that general or specific embodiments may be implemented as a system, an apparatus, a method, an integrated circuit, a computer program, a storage medium, or any selective combination thereof.

According to an exemplary embodiment of the present disclosure, it is possible to realize appropriate shared control in coordinated communication.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 illustrates an exemplary configuration of a multi-access point (multi-AP, MAP);
FIG. 2 illustrates an exemplary communication environment in which downlink and uplink coverages are different from each other;
FIG. 3 illustrates an exemplary control sequence of the MAP;
FIG. 4 illustrates another exemplary control sequence of the MAP;
FIG. 5 is a block diagram illustrating an exemplary configuration of a part of an AP according to Embodiment 1;
FIG. 6 is a block diagram illustrating an exemplary configuration of the AP according to Embodiment 1;
FIG. 7 is a block diagram illustrating an exemplary configuration of an STA according to Embodiment 1;
FIG. 8 illustrates an exemplary control sequence of the MAP according to Embodiment 1;
FIG. 9 illustrates an exemplary channel state information request (CSI Req) frame;
FIG. 10 illustrates an exemplary definition of the CSI request in a frame control field;
FIG. 11 illustrates an exemplary definition of the CSI request in a trigger type subfield;
FIG. 12 illustrates an example in which a beamforming report poll (BFRP) trigger frame format is specified and a CSI request subfield is provided;
FIG. 13 illustrates an exemplary CSI sharing request (CSI ShareReq) frame;
FIG. 14 illustrates an example in which the BFRP trigger frame format is specified and a CSI sharing request subfield is provided;
FIG. 15 illustrates an exemplary definition of the CSI sharing request in a trigger type subfield;
FIG. 16 illustrates an example in which the BFRP trigger frame format is specified and the CSI sharing request subfield is provided;
FIG. 17 illustrates an exemplary CSI sharing (CSI Share) frame;
FIG. 18 illustrates an exemplary definition of the CSI sharing in a frame control field;
FIG. 19 illustrates an exemplary definition of an HE/EHT compressed beamforming/channel quality indicator (CQI) frame;
FIG. 20 illustrates an exemplary control sequence of the MAP according to Embodiment 2;
FIG. 21 illustrates an exemplary CSI sharing request frame;
FIG. 22 illustrates an exemplary definition of the CSI sharing request in a frame control field;
FIG. 23 illustrates an exemplary definition of the CSI sharing request in a trigger type subfield;
FIG. 24 illustrates an example in which the BFRP trigger frame format is specified and the CSI sharing request subfield is provided;
FIG. 25 illustrates an exemplary CSI sharing frame;
FIG. 26 illustrates an exemplary definition of the CSI sharing in the frame control field;
FIG. 27 illustrates an exemplary definition of an HE/EHT compressed beamforming/CQI frame;
FIG. 28 illustrates an exemplary control sequence of the MAP according to Embodiment 3;
FIG. 29 illustrates example 1 in which a MAP null data packet announcement (NDPA) frame includes a CSI sharing request;
FIG. 30 illustrates example 2 in which the MAP NDPA frame includes a CSI sharing request;
FIG. 31 illustrates example 3 in which the MAP NDPA frame includes a CSI sharing request;
FIG. 32 illustrates an exemplary CSI sharing frame;
FIG. 33 illustrates an exemplary definition of the CSI sharing in the frame control field;
FIG. 34 illustrates an exemplary definition of the HE/EHT compressed beamforming/CQI frame;
FIG. 35 illustrates an exemplary control sequence of the MAP according to Embodiment 4;
FIG. 36 illustrates an example in which the MAP NDPA frame includes a CSI sharing request flag (CSI ShareReq flag);
FIG. 37 illustrates an exemplary line configuration between shared APs;
FIG. 38 illustrates an exemplary control sequence of the MAP according to Embodiment 5; and
FIG. 39 illustrates an exemplary MAP NDPA frame in Embodiment 5.

### Description of Embodiments

Hereinafter, embodiments of the present disclosure will be described in detail with reference to the accompanying drawings.

### [Multi-Access Point Coordination]

In 11be, for example, studies have been carried out on the application of Multi-AP (hereinafter, referred to as "MAP") coordination (hereinafter, also referred to as "coordinated communication" or "inter-base-station coordinated communication") in which a plurality of access points (each also referred to as "AP" or "base station") cooperatively transmit and receive data to and from each terminal (also referred to as "STA: station" or "non-AP STA") (e.g., see NPL 1 to NPL 3).

Multi-AP coordination schemes are studied for the coordinated communication in 11be. For example, the following schemes are discussed.
· Coordinated Spatial Reuse (hereinafter, sometimes referred to as "C-SR")
· Coordinated OFDMA (hereinafter, sometimes referred to as "C-OFDMA")
· Joint Transmission (hereinafter, sometimes referred to as "JT")
· Coordinated Beamforming (hereinafter, sometimes referred to as "CBF")

Note that the MAP coordination scheme is replaced by another term such as a "communication type" or an "MAP type". JT in the present definition may include a method of transmitting the same signal from a plurality of coordinated APs and a method of transmitting different transmission streams from a plurality of coordinated APs. The latter is referred to as distributed multi user-multiple input multiple output (hereinafter, sometimes referred to as "D-MIMO").

In some cases, JT is defined as the method of transmitting the same signal from a plurality of coordinated APs and defined to be a different scheme from D-MIMO. The description in this specification is based on the latter definition for convenience.

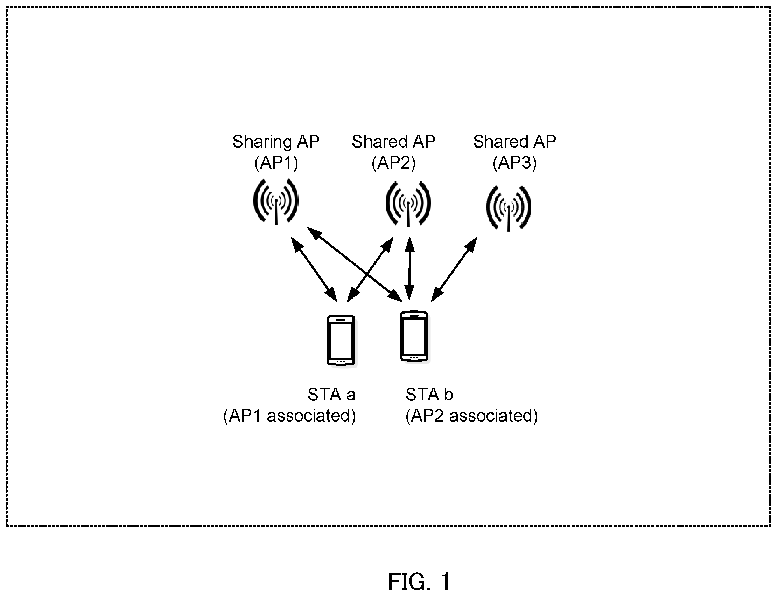

FIG. 1 illustrates an exemplary configuration of APs and STAs performing coordinated communication (exemplary configuration of MAP).

In FIG. 1, the "sharing AP" may be an AP that obtains a channel use (or transmission) period (e.g., TXOP: transmission opportunity), for example, and starts (or controls) coordinated communication. The "shared APs" may be APs that are indicated to perform coordinated communication by the sharing AP.

Note that, in the example illustrated in FIG. 1, any one of the shared APs (e.g., AP 1) also serves as the sharing AP, but the present disclosure is not limited thereto, and the sharing AP and shared AP may be configured to be different APs from each other.

In the example of FIG. 1, STA a is associated (may be referred to as "connected") with the sharing AP (AP 1), and performs coordinated communication between the sharing AP (AP 1) and the shared AP (AP 2). Further, in the example of FIG. 1, STA b is associated with the shared AP (AP 2), and performs coordinated communication between the sharing AP (AP 1), shared AP (AP 2), and shared AP (AP 3).

To optimize the throughput or quality of coordinated communication, NDPs are transmitted from the shared APs, and propagation channel state information (CSI) is estimated and reported to the shared APs The CSI reported to the shared APs are aggregated to an AP that determines the MAP coordination scheme described above, e.g., the sharing AP (see, for example, NPL 2).

### [Retransmission Control in MAP Coordination]

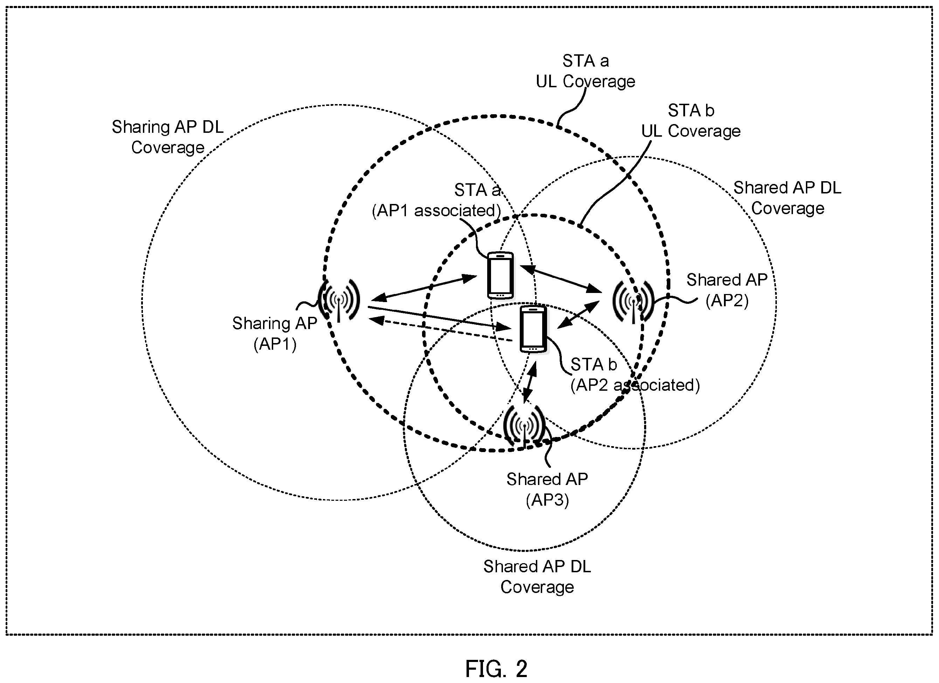

FIG. 2 illustrates an exemplary communication environment in which downlink and uplink coverage areas (communicable ranges, hereinafter, each may be referred to as a "coverage") are different from each other. Note that the connection relationship between AP 1, AP 2, AP 3, STA a, and STA b illustrated in FIG. 2 may be the same as the connection relationship between APs and STAs illustrated in FIG. 1.

As illustrated in FIG. 2, STA a is present in (or is located in, the same will apply hereinafter) the downlink coverage of each of the sharing AP (AP 1) and shared AP (AP 2). Further, in the uplink coverage of STA a, the sharing AP (AP 1) and shared AP (AP 2) are present. Thus, STA a can simultaneously respond to the sharing AP (AP 1) and shared AP (AP 2) with CSI for downlink data.

Meanwhile, STA b is present in the downlink coverage of each of the sharing AP (AP 1), shared AP (AP 2), and shared AP (AP 3). In the uplink coverage of STA b, however, the shared AP (AP 2) and shared AP (AP 3) are present while the sharing AP (AP 1) is outside the uplink coverage of STA b. Thus, STA b possibly fails to simultaneously respond to the sharing AP (AP 1), shared AP (AP 2), and shared AP (AP 3) with CSI for downlink data. For example, the sharing AP (AP 1) possibly receives no CSI from STA b.

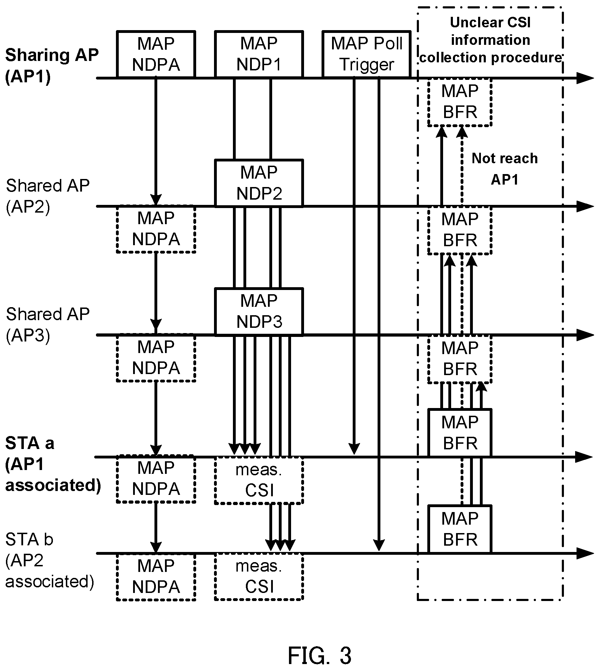

FIG. 3 illustrates an exemplary control sequence (i.e., CSI measurement and feedback) of MAP in the communication environment illustrated in FIG. 2.

In FIG. 3, for example, the sharing AP (AP 1) transmits MAP NDPA (NDP announcement for MAP) to the shared APs (AP 2 and AP 3) and STAs (STA a and STA b). MAP NDPA may include, for example, information on the shared APs involved in CSI measurement, a communication parameter for each pair of the shared AP and STA, and IDs of STAs participating in the coordinated communication. In this exemplary control sequence, MAP NDPA is transmitted by the sharing AP (AP 1) that shares transmission data, but MAP NDPA may be transmitted by any of the shared APs (AP 2 and AP 3) instead of the sharing AP (AP 1).

After the MAP NDPA transmission, for example, designated shared APs transmit MAP NDP (NDP for MAP), and each STA measures CSI. The sharing AP (AP 1) transmits, for example, a MAP poll trigger frame indicating feedback of the CSI measured in each STA. An STA that has received the MAP poll trigger frame feeds back the CSI using a MAP BFR (beamforming report for MAP) frame, for example.

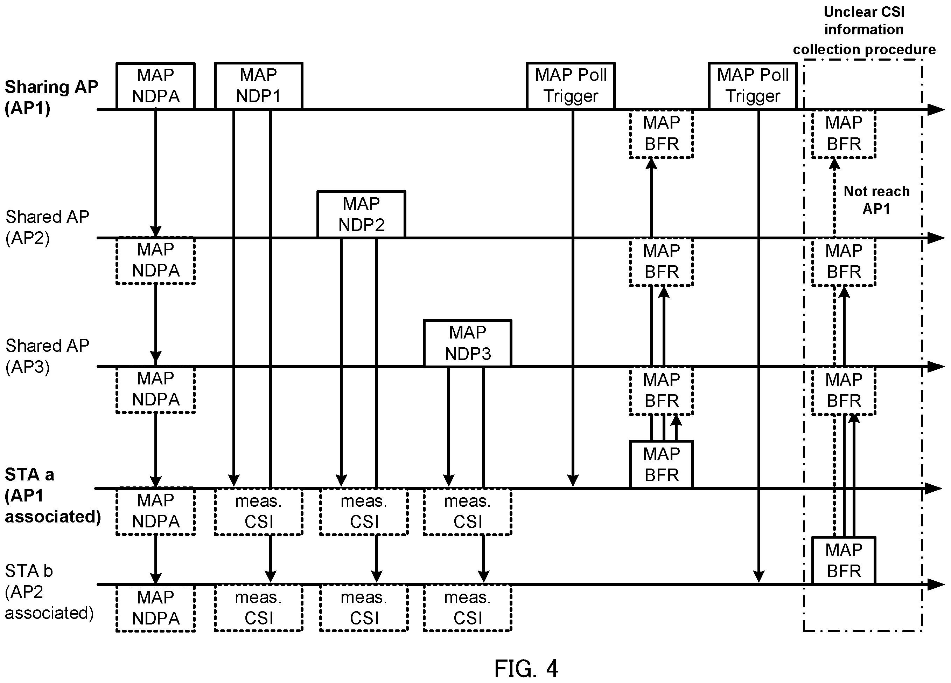

The control sequence illustrated in FIG. 3 is an example in which MAP NDP is transmitted from shared APs simultaneously (or in parallel; the same will apply hereinafter) and MAP BFR is fed back from each STA in parallel. In addition to that, there is another method in which MAP NDP is sequentially transmitted from each shared AP and MAP BFR is also fed back sequentially, as in the exemplary control sequence illustrated in FIG. 4, for example.

Depending on the MAP coordination scheme, the control sequence may be changed (i.e., selected or switched) between parallel transmission as illustrated in FIG. 3 or sequential transmission as illustrated in FIG. 4. The control sequence configuration of MAP NDPA and MAP NDP may be adapted to the control sequence configuration of MAP trigger and the data transmission. For example, when the timing and phase are required to be synchronized between APs, such as when the MAP coordination scheme is JT, the parallel transmission of MAP NDP as illustrated in FIG. 3 may be used as the control sequence.

Further, for example, the shared APs (AP 2 and AP 3) may correct the carrier frequency and phase of MAP NDP based on MAP NDPA of the sharing AP (AP 1). Likewise, in JT data transmission of the shared APs (AP 2 and AP 3), the carrier frequency, phase, and symbol frequency of JT data may be corrected based on MAP trigger of the sharing AP (AP 1).

In a case where the control sequence of sequential transmission is applied when the MAP coordination scheme is JT, for example, the following measure may be required to grasp the absolute phase of MAP NDP.
· The sharing AP (AP 1) transmits MAP NDPA immediately before MAP NDP each time, and the shared APs (AP 2 and AP 3) correct the phase or frequency of MAP NDP based on the MAP NDPA.
· The STA measures NDP by correcting the reference phase or frequency based on the MAP NDPA immediately before each MAP NDP.
· In this case, entire NDPA information may be transmitted first, and NDPA with relatively little information (e.g., role of trigger, simply) may be transmitted before transmission of individual NDP.

Here, when any of the shared APs cannot receive CSI from each STA, appropriate coordinated communication possibly cannot be implemented. For example, as illustrated in FIG. 2, the sharing AP (AP 1) is out of uplink coverage of STA b, so that MAP BFR (CSI feedback) does not reach the sharing AP (AP 1). Coordinated communication control may fail since the sharing AP (AP 1) does not receive CSI. In addition, a method of sharing CSI information of each STA among the shared APs (or among the sharing AP and shared APs) has not been fully studied.

With this regard, in an embodiment of the present disclosure, a description will be given of a method of achieving appropriate MAP coordinated communication control (and thus, improvement in the quality of MAP coordinated communication) by specifying a method of sharing CSI information. For example, in a MAP operation, a CSI sharing phase for sharing CSI is provided after MAP BFR (CSI feedback) from each STA to share CSI among the sharing AP and shared APs.

Note that the term "phase" as in the CSI sharing phase may be replaced with another term such as a "period", "sequence", or "procedure", for example.

### [Configuration of Radio Communication System]

A radio communication system according to the present embodiment may include, for example, a plurality of APs 100 and STAs 200. AP 100 may include, for example, functions of both the sharing AP and shared AP, or may include either one of the functions.

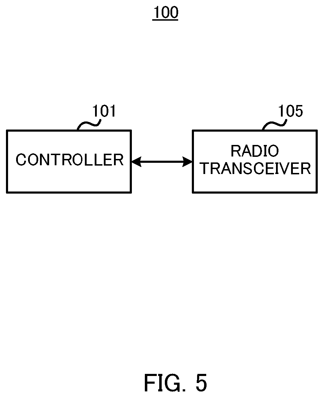

FIG. 5 is a block diagram illustrating an exemplary configuration of a part of AP 100 according to an embodiment of the present disclosure. In AP 100 illustrated in FIG. 5, radio transceiver 105 (corresponding to reception circuitry, for example) receives control information on CSI sharing in inter-base-station coordinated communication (e.g., MAP coordination). Controller 101 (corresponding to control circuitry, for example) controls transmission of CSI to another base station (e.g., another AP 100) based on the received control information.

### (Embodiment 1)

### [Exemplary Configuration of AP 100]

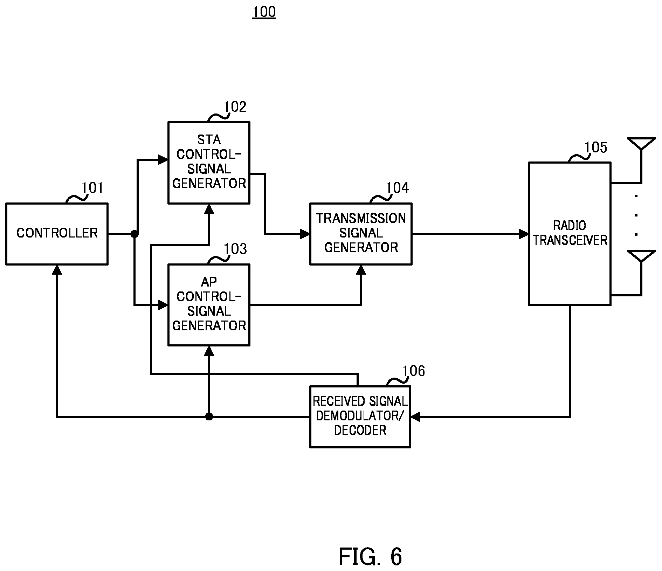

FIG. 6 is a block diagram illustrating an exemplary configuration of AP 100. AP 100 illustrated in FIG. 6 may include, for example, controller 101, control signal generator for STA (hereinafter, referred to as STA control-signal generator) 102, control signal generator for AP (hereinafter, referred to as AP control-signal generator) 103, transmission signal generator 104, radio transceiver 105, and received signal demodulator/decoder 106.

Controller 101 may control the configuration of a frame (or signal) such as a MAP NDPA frame, a MAP NDA frame, and a MAP poll trigger frame, and may also perform control on CSI sharing. For example, when the AP is the sharing AP, controller 101 may control generation of a control signal (e.g., MAP NDPA frame) for another AP 100 (e.g., shared AP) or STA 200. Further, when receiving CSI from each STA 200, for example, controller 101 may determine whether to perform control on the CSI sharing and control the CSI sharing among APs.

Further, controller 101 may configure control information for STA 200 or another AP 100, for example. For example, controller 101 may configure resource allocation information for each STA 200 and scheduling information such as a modulation and coding scheme (MCS). Furthermore, controller 101 may, for example, determine a parameter on coordinated communication control based on the information inputted from received signal demodulator/decoder 106 (e.g., control information indicated from the sharing AP to shared AP). Controller 101 may, for example, output control information including the determined coordinated communication control parameter to STA control-signal generator 102 and AP control-signal generator 103.

STA control-signal generator 102 may generate, for example, a control signal for STA 200 (e.g., MAP NDPA frame), and output the generated control signal to transmission signal generator 104.

AP control-signal generator 103 may, for example, generate a control signal for AP 100. The control signal for AP 100 may include, for example, a MAP NDPA frame or a control frame for controlling CSI sharing. For example, AP control-signal generator 103 may generate a control signal based on at least one of the control information inputted from controller 101 and the information inputted from received signal demodulator/decoder 106. AP control-signal generator 103 may output the generated control signal to transmission signal generator 104, for example.

Transmission signal generator 104 may, for example, perform transmission processing on the control signal inputted from STA control-signal generator 102 or AP control-signal generator 103 or on data, and may generate a radio frame, which is a transmission signal. Transmission signal generator 104 may output the generated transmission signal to radio transceiver 105.

Radio transceiver 105, for example, performs radio transmission processing, such as D/A conversion or up-conversion to a carrier frequency, on the transmission signal inputted from transmission signal generator 104, and transmits the signal after the radio transmission processing via an antenna.

When AP 100 receives an uplink signal transmitted from STA 200 or a control signal transmitted from another AP 100, AP 100 may operate as described below, for example.

The radio signal received via an antenna is inputted to radio transceiver 105, for example. Radio transceiver 105, for example, performs radio reception processing such as down-conversion of a carrier frequency on the received radio signal, and outputs the signal after the radio reception processing to received signal demodulator/decoder 106.

Received signal demodulator/decoder 106 may, for example, perform processing such as autocorrelation processing on the signal inputted from radio transceiver 105, and may extract the received radio frame. Further, received signal demodulator/decoder 106 may, for example, decode and demodulate an uplink signal (e.g., a response signal or feedback information) from STA 200 or a control signal (e.g., MAP NDPA frame) from another AP 100 included in the extracted radio frame. The demodulated and decoded control signal may be outputted to, for example, controller 101, STA control-signal generator 102, and AP control-signal generator 103.

### [Exemplary Configuration of STA 200]

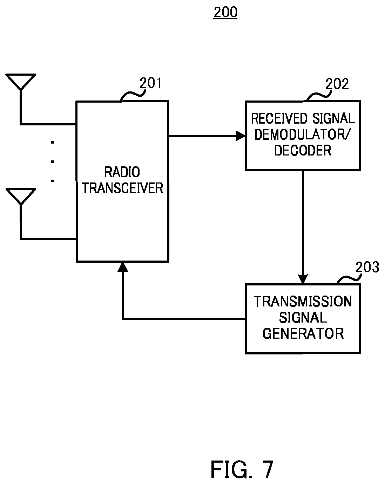

FIG. 7 is a block diagram illustrating an exemplary configuration of STA 200 according to the present embodiment. STA 200 illustrated in FIG. 7 may include, for example, radio transceiver 201, received signal demodulator/decoder 202, and transmission signal generator 203.

Radio transceiver 201, for example, receives a signal transmitted from AP 100 via an antenna, performs radio reception processing such as down-conversion or A/D conversion on the received signal. The signal after the radio reception processing may be outputted to received signal demodulator/decoder 202, for example. Further, radio transceiver 201 may, for example, perform radio transmission processing such as D/A conversion and up-conversion to a carrier frequency on a signal inputted from transmission signal generator 203. The signal after the radio transmission processing is transmitted via an antenna, for example.

For example, received signal demodulator/decoder 202 may perform processing such as autocorrelation processing on the signal inputted from radio transceiver 201, and extract the received radio frame. Received signal demodulator/decoder 202 may, for example, demodulate and decode a control signal (e.g., MAP poll trigger frame) included in the extracted radio frame, and obtain an uplink transmission control parameter. The obtained uplink transmission control parameter may be outputted to, for example, transmission signal generator 203.

Transmission signal generator 203 may, for example, perform transmission signal processing on an uplink signal (e.g., feedback information) based on the uplink transmission control parameter inputted from received signal demodulator/decoder 202, and generate a radio frame, which is a transmission signal. The generated transmission signal may be outputted to radio transceiver 201, for example.

### [Exemplary Operations of AP 100 and STA 200]

Next, exemplary operations of AP 100 and STA 200 according to the present embodiment will be described.

In the present embodiment, for example, an AP that controls CSI sharing is defined as a "CSI control AP". CSI information is collected in the CSI control AP, and then the CSI control AP performs control for sharing CSI among the sharing AP and shared APs.

The CSI control AP is an AP that performs control for sharing CSI among APs, and may be, for example, a sharing AP or a shared AP capable of receiving CSI transmitted from STAs 200 under MAP. AP 100 serving as the CSI control AP may be configured (defined or changed) periodically or non-periodically depending on the propagation environment, for example. This allows dynamic configuration of AP 100 serving as the CSI control AP depending on the propagation environment, for example, thereby enabling adaptive optimization of CSI sharing control.

In the present embodiment, the following control steps (A1), (B1), and (C1) may be provided in a phase after MAP BFR (CSI feedback) transmission processing by each STA 200 (may be referred to as a "CSI sharing phase"), for example. Note that the term "step" may be replaced with another terms such as "processing" or "procedure".

(A1) When receiving no CSI, a shared AP transmits a signal for requesting CSI (referred to as a "CSI request frame", for example) to the CSI control AP.
(B 1) Upon receiving the CSI request frame, the CSI control AP transmits a signal for indicating CSI sharing (referred to as a "CSI sharing request frame", for example) to each shared AP.
(C1) Upon receiving the CSI sharing request frame, the shred AP transmits a CSI sharing frame.

Note that a channel use period called TXOP may be configured in the MAP NDPA frame, which is a trigger to start CSI measurement, for example, and a CSI sharing phase including the above control steps (A1), (B1), and (C1) may be configured in the TXOP.

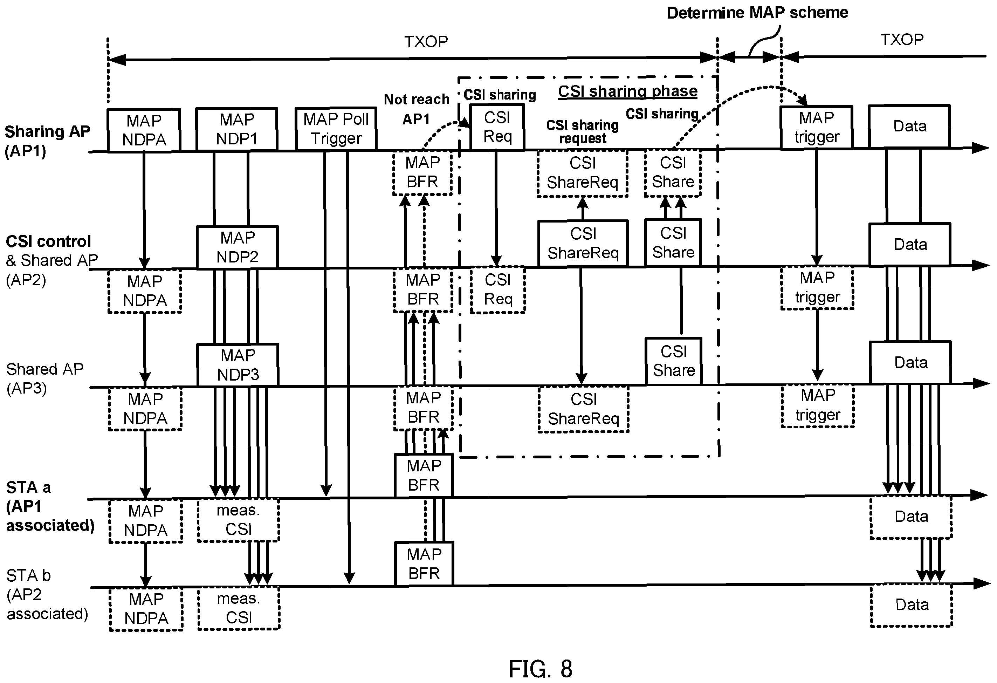

FIG. 8 illustrates an exemplary control sequence of MAP (i.e., control sequence of CSI measurement and feedback) according to the present embodiment.

Note that, as is the case with FIG. 3, FIG. 8 illustrates an exemplary control sequence of MAP in the communication environment illustrated in FIG. 2. For example, FIG. 8 illustrates an example regarding CSI for MAP NDP transmitted from the sharing AP (AP 1) and shared APs (AP 2 and AP 3), in which CSI from STA b does not reach the sharing AP (AP 1).

In the case of FIG. 8, the shared AP (AP 2) capable of receiving CSI from both STA a and STA b may be configured to be (or defined as) the CSI control AP, for example. Note that the configuration (or designation) of the CSI control AP may be performed in the MAP NDPA frame, which is an example of a trigger (or signal) to start CSI measurement, or may be performed in a phase prior in time to the MAP NDPA frame (e.g., phase for setup for MAP or channel estimation).

For example, in the control step (A1), the sharing AP (e.g., AP 1) that has received no CSI may transmit a CSI request frame to the shared AP (AP 2) serving as the CSI control AP.

In the control step (B1), when receiving the CSI request frame from the sharing AP (AP 1) that has received no CSI, the shared AP (AP 2) serving as the CSI control AP may transmit a CSI sharing request frame for indicating CSI sharing (e.g., CSI transmission to AP 1) to shared APs (e.g., AP 1 and AP 3), for example.

In the control step (C1), for example, specified shared APs transmit CSI sharing frames in response to the CSI sharing request frame from the CSI control AP. In the example of FIG. 8, the shared APs (AP 2 and AP 3) that have received CSI from STA b may indicate the CSI by transmitting CSI sharing frames to the sharing AP (AP 1) that has received no CSI. This allows AP 1, AP 2, and AP 3 to share the CSI from STA b.

As described above, CSI information of STAs 200 under MAP can be shared among the sharing AP and shared APs by defining AP 100 that controls CSI sharing as the CSI control AP, collecting CSI information in the CSI control AP, and then performing control for sharing CSI among the sharing AP and shared APs. It is thus possible to implement appropriate coordinated communication control for MAP, and the appropriate coordinated communication control improves the quality of MAP coordinated communication.

Note that, the control sequence illustrated in FIG. 8 (e.g., MAP scheme determination) may include, in the case of JT, a phase in which the CSI control AP determines a steering matrix (or precoding codebook) as a whole MAP and distributes precoding information to respective APs for their responsibilities.

In a case where the MAP scheme is already determined to be JT, the operation after MAP BFR may be performed as follows, for example.
· When no CSI cannot be received by the CSI control AP (i.e., when there is no missing CSI), enter the precoding information distribution phase and transmit precoding information to the shared APs.
· When there is missing CSI, transmit the CSI request at that timing.

It sometimes becomes apparent that JT is not appropriate after the MAP scheme is determined to be JT. In such a case, when the CSI request is performed after determining the MAP scheme to be JT, the operation of determining the MAP scheme may be replaced with the operation of changing the MAP scheme.

Next, exemplary configurations of frames used in the above control steps (A1), (B1), and (C1) will be described.

### <CSI Request Frame (Control Step (A1))>

The CSI request frame used in the control step (A1) may be configured to include, for example, an address field of a shared AP that is the source of the CSI request frame (i.e., shared AP received no CSI; AP 1 serving as the sharing AP in FIG. 8).

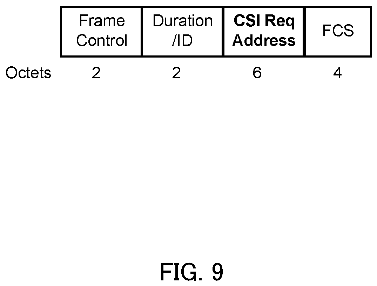

FIG. 9 illustrates an exemplary configuration of the CSI request (CSI Req) frame.

As illustrated in FIG. 9, the CSI request frame may include, for example, an address (e.g., CSI Req Address) of the shared AP, which is the source of the CSI request frame. This address (CSI Req Address) may be, for example, a medium access control (MAC) address of AP 100, or may be a virtual basic service set (BBS) address. For example, as the virtual BSS address, a single identifier (ID) may be assigned to a plurality of APs 100 subjected to the MAP operation, or a plurality of IDs within a particular ID range may be assigned.

Specification (or indication) of the "frame type" indicating that the radio frame is the CSI request frame may be based on at least one of the following definitions (or configurations), for example.
· Type value and subtype value in a frame control field
· New trigger type (trigger type subfield value)
· Specify a BFRP trigger frame format and provide a CSI Req (CSI request) subfield

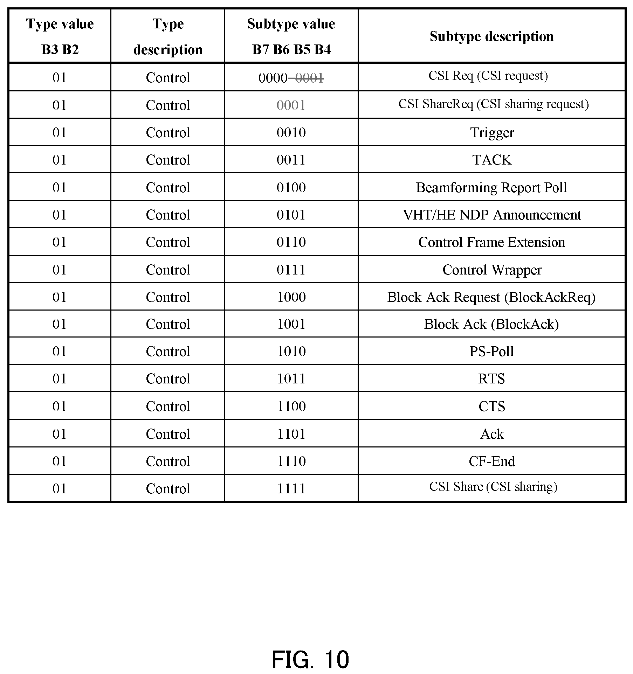

FIG. 10 illustrates an example in which the frame type is specified by the type value and the subtype value in the frame control field of the CSI request frame illustrated in FIG. 9. In FIG. 10, the type of CSI request frame is exemplarily defined by "0000", which is an undefined subtype value (e.g., reserved) in 11ax (e.g., control type of Table 9-1 Valid type and subtype combinations of 11ax specification). Note that FIG. 10 illustrates the example in which the type of CSI request frame is defined by "0000", but the present disclosure is not limited thereto, and the frame type may be defined by another undefined value.

Although FIG. 10 illustrates an example of defining three subtypes of CSI Req (CSI request), CSI ShareReq (CSI sharing request), and CSI Share (CSI sharing), the present disclosure is not limited thereto, and the three types may be indicated by providing three variants in a single CSI sharing subtype, for example.

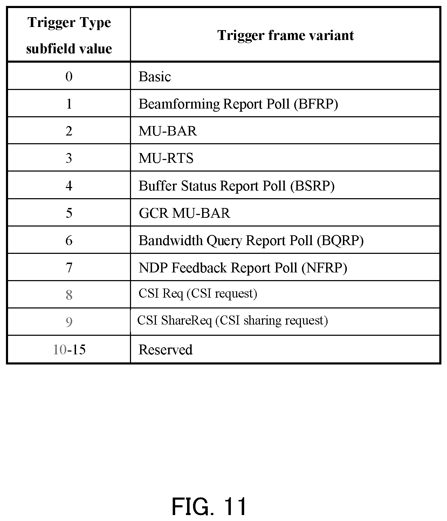

FIG. 11 illustrates an example of specifying that it is the CSI request frame by a new trigger type (trigger type subfield value). In FIG. 11, the type of CSI request frame is exemplarily defined by "8", which is an undefined trigger type subfield value (e.g., reserved) in 11ax (e.g., control type of Table 9-29c Trigger Type subfield encoding of 11ax specification). Note that FIG. 11 illustrates the example in which the type of CSI request frame is defined by "8", but the present disclosure is not limited thereto, and the frame type may be defined by another undefined value.

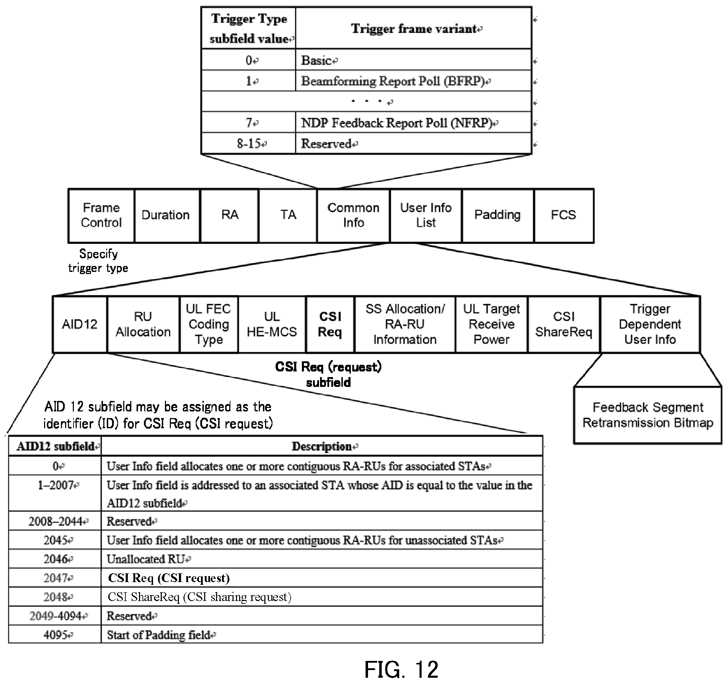

FIG. 12 illustrates the case of specifying a BFRP trigger frame format and providing a CSI Req (CSI request) subfield. FIG. 12 illustrates an example of specifying a BFRP trigger frame format by a trigger type and providing a CSI Req (CSI request) subfield in user information (Use Info List) of the frame. This CSI Req (CSI request) subfield may indicate, for example, the presence or absence of a CSI request. Alternatively, the Association ID (AID) 12 subfield may be assigned as the identifier (ID) for CSI Req (CSI request) as illustrated in FIG. 12.

### <CSI Sharing Request Frame (Control Step (B1))>

The CSI sharing request frame used in the control step (B1) may be configured to include, for example, an address field of a sharing AP or a shared AP that requests CSI (AP 1 in the example of FIG. 8).

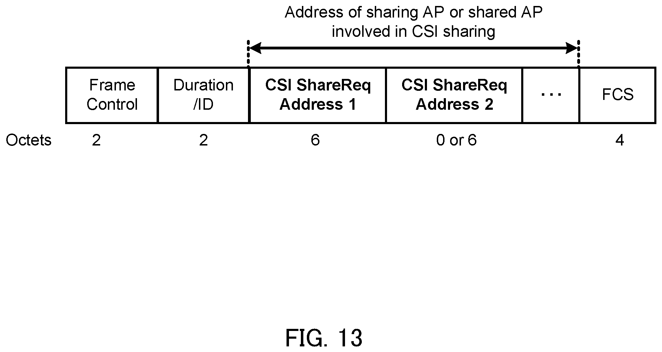

FIG. 13 illustrates an exemplary configuration of the CSI sharing request (CSI ShareReq) frame.

As illustrated in FIG. 13, the CSI sharing request frame may include, for example, at least one address (e.g., CSI ShareReq Address) of the sharing AP that requests CSI or the shared AP (e.g., AP that requests CSI sharing). For example, the address (CSI ShareReq Address) included in the CSI sharing request frame may include the address (CSI Req Address) in the CSI request frame used in the control step (A1).

The frame type specifying (or indicating) that the radio frame is the CSI sharing request frame may be based on at least one of the following definitions (or configurations), for example.
· Type value and subtype value in the frame control field
· New trigger type (trigger type subfield value)
· Specify the BFRP trigger frame format and provide the CSI Req (CSI request) subfield

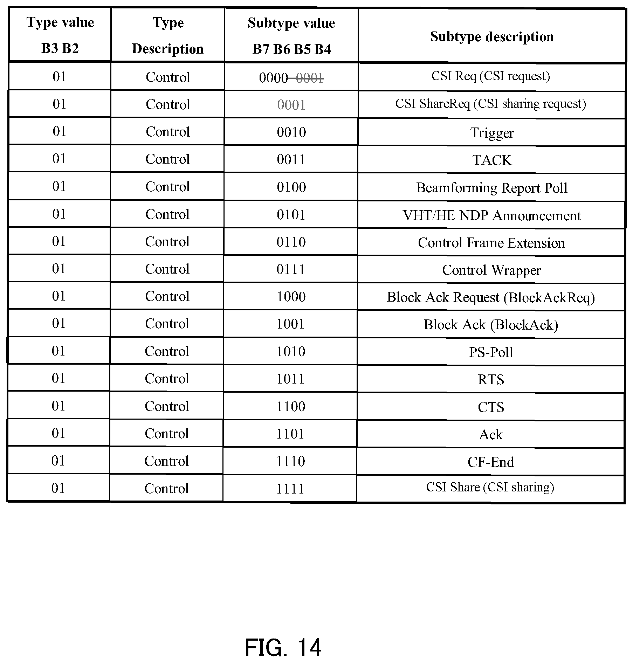

FIG. 14 illustrates an example in which the frame type is specified by the type value and the subtype value in the frame control field of the CSI sharing request frame illustrated in FIG. 13. In FIG. 14, the type of CSI sharing request (CSI ShareReq) frame is exemplarily defined by "0001", which is an undefined subtype value (e.g., reserved) in 11ax (e.g., control type of Table 9-1 Valid type and subtype combinations of 11ax specification). Note that FIG. 14 illustrates the example in which the type of CSI sharing request frame is defined by "0001", but the present disclosure is not limited thereto, and the frame type may be defined by another undefined value.

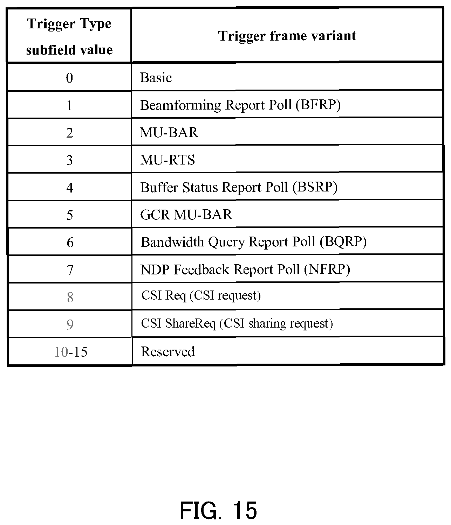

FIG. 15 illustrates an example of specifying the frame type by a new trigger type (trigger type subfield value). In FIG. 15, the type of CSI sharing request frame is exemplarily defined by "9", which is an undefined trigger type subfield value (e.g., reserved) in 11ax (e.g., control type of Table 9-29c Trigger Type subfield encoding of 11ax specification). Note that, although the type of CSI sharing request frame is defined by "9" in this example, the type of CSI sharing request frame may be defined by another undefined value.

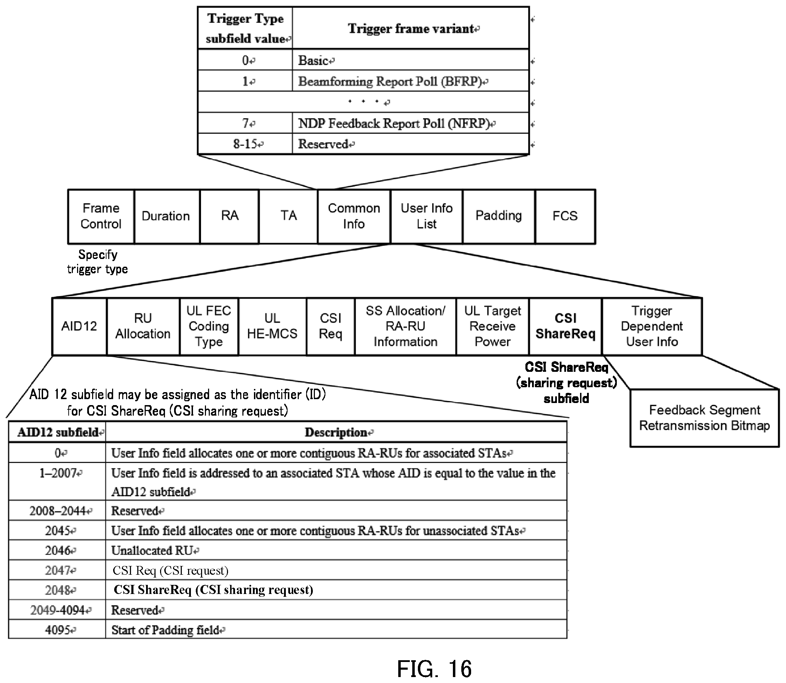

FIG. 16 illustrates the case of specifying the BFRP trigger frame format and providing the CSI Req (CSI request) subfield. FIG. 16 illustrates an example of specifying the BFRP trigger frame format by the trigger type and providing the CSI ShareReq (CSI sharing request) subfield in user information (Use Info List) of the frame. This CSI ShareReq (CSI sharing request) subfield may indicate, for example, the presence or absence of a CSI sharing request. Alternatively, the AID 12 subfield may be assigned as the identifier (ID) for CSI ShareReq (CSI sharing request) as illustrated in FIG. 16.

### <CSI Sharing Frame (Control Step (C1))>

The CSI sharing frame used in the control step (C1) may be configured to include, for example, CSI information.

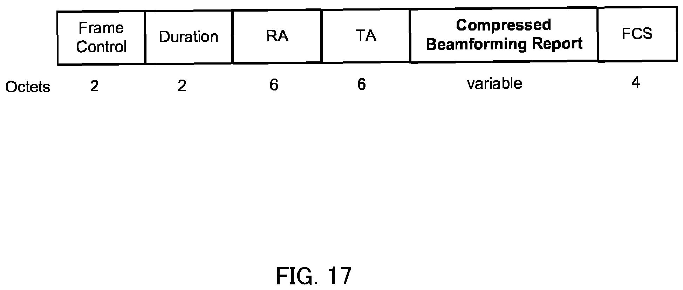

FIG. 17 illustrates an exemplary configuration of the CSI sharing (CSI Share) frame.

The compressed beamforming report field included in the CSI sharing frame illustrated in FIG. 17 may include, for example, an HE/EHT compressed beamforming report field.

The frame type specifying (or indicating) that the radio frame is the CSI sharing frame may be based on at least one of the following definitions (or configurations), for example.
· Type value and subtype value in the frame control field
· Newly define in action field values in an HE/EHT compressed beamforming/CQI frame or in a feedback type or an undefined (reserved) domain of an HE/EHT MIMO control field

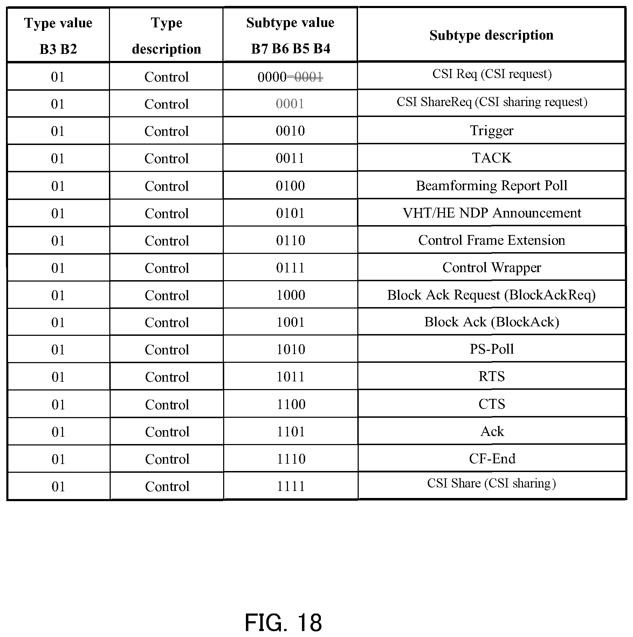

FIG. 18 illustrates an example in which the frame type is specified by the type value and the subtype value in the frame control field of the CSI sharing frame illustrated in FIG. 17. In FIG. 18, the type of CSI sharing (CSI Share) frame is exemplarily defined by "1111", which is an undefined subtype value (e.g., reserved) in 11ax (e.g., control type of Table 9-1 Valid type and subtype combinations of 11ax specification). Note that FIG. 18 illustrates the example in which the type of CSI sharing frame is defined by "1111", but the present disclosure is not limited thereto, and the frame type may be defined by another undefined value.

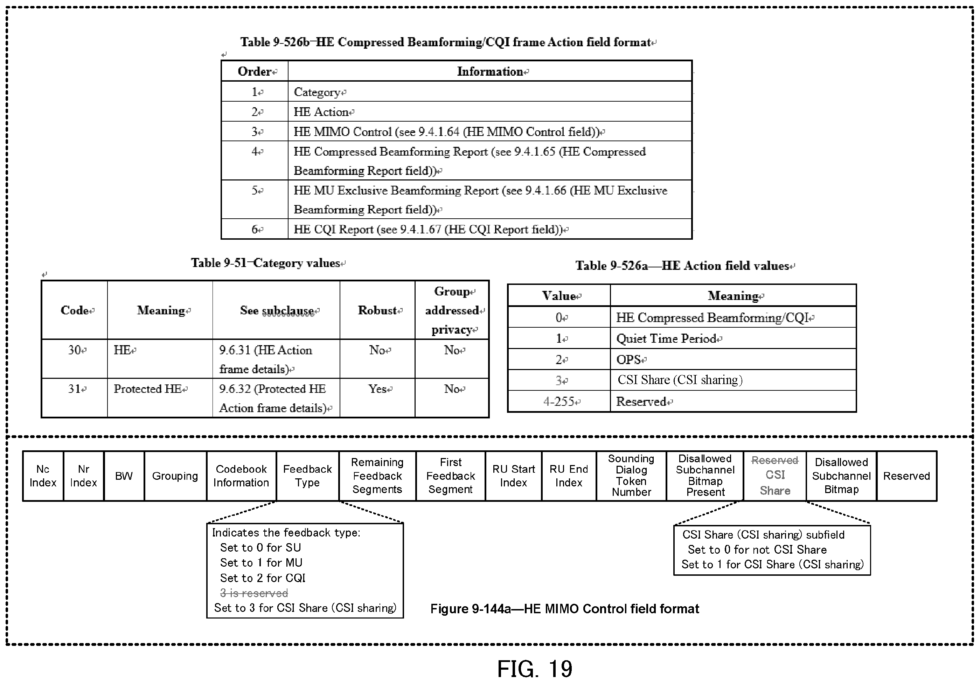

FIG. 19 illustrates an example of defining the type of CSI sharing frame in action field values in the HE/EHT compressed beamforming/CQI frame or newly defining the type of CSI sharing frame in a feedback type or an undefined (reserved) domain of the HE/EHT MIMO control field.

In FIG. 19, the type of CSI sharing (CSI Share) frame is exemplarily defined by "3" that is an undefined value (e.g., reserved) in 11ax (e.g., Table 9-526a HE Action field values of 11ax specification). Note that FIG. 19 illustrates the example in which the type of CSI sharing frame is defined by "3", but the present disclosure is not limited thereto, and the frame type may be defined by another undefined value (e.g., any of 4 to 255).

In addition, FIG. 19 indicates that the type of CSI sharing (CSI Share) frame may be defined by "3" that is an undefined value (e.g., reserved) of the feedback type in 11ax (e.g., Figure 9-144a MIMO Control field format of 11ax specification). FIG. 19 also illustrates an example in which a reserved field in 11ax (e.g., Figure 9-144a MIMO Control field format of 11ax specification) is newly defined as a CSI sharing subfield, indicating that it is a CSI sharing frame by "1" and that it is not a CSI sharing frame by "0".

Note that the configuration (or indication) of the type of CSI sharing frame illustrated in FIG. 19 is merely a non-liming example, and the configuration may be realized using other undefined values or undefined domains.

The exemplary configurations of various frames related to CSI sharing used in the control steps (A1), (B1), and (C1) have been described, thus far.

As described above, in the present embodiment, AP 100 receives control information (radio frame) on sharing of feedback information (e.g., CSI information) for a downlink signal in inter-base-station coordinated communication, and controls transmission of CSI to another AP based on the received control information.

In the present embodiment, for example, AP 100 serving as the CSI control AP instructs (i.e., requests), when control information (e.g., CSI request frame) received from another AP 100 indicates a CSI request, AP 100 other than the another AP (AP transmitting the CSI request frame) 100 among base stations involved in inter-base-station coordinated communication to transmit CSI to (i.e., share CSI with) the another AP 100. Further, in the present embodiment, for example, AP 100 other than CSI control AP 100 determines, when the received control information (e.g., CSI sharing request frame) indicates a CSI sharing request, transmission of CSI (e.g., CSI sharing frame) to another AP 100 indicated in the control information.

This CSI sharing control allows a plurality of APs 100 (e.g., sharing AP and shared APs) to share CSI from STAs 200 under MAP. Even when AP 100 receives no CSI from STA 200, for example, AP 100 can obtain the CSI by CSI sharing from another AP 100, thereby enabling appropriate coordinated communication control. Thus, the present embodiment makes it possible to, for example, optimize the throughput or quality of MAP coordinated communication and improve the quality of MAP coordinated communication.

Note that the CSI request frame may include, for example, the address of STA 200 that has transmitted CSI, in addition to the address of source AP 100 (i.e., AP 100 out of reach of the CSI). Accordingly, the CSI not received by source AP 100 of the CSI request frame is configured to be the CSI to be shared among a plurality of APs 100, and other CSI need not be shared, thereby reducing overhead in the CSI sharing control.

### (Embodiment 2)

Next, Embodiment 2 will be described. The exemplary configurations of AP 100 and STA 200 according to Embodiment 2 may be the same as in Embodiment 1.

In Embodiment 1, a description has been given of the case where AP 100 serving as the CSI control AP performs control of sharing of CSI from STAs 200 for a plurality of APs 100, for example. In Embodiment 2, a case where AP 100 individually performs the CSI sharing control will be described. For example, when receiving no CSI from STA 200, AP 100 may individually request CSI sharing to another AP 100.

Thus, in Embodiment 2, the following control steps (A2) and (B2) may be provided as a CSI sharing phase, for example, in a phase after the process of transmitting MAP BFR (CSI feedback) by each STA 200.

(A2) When receiving no CSI, a shared AP transmits a CSI sharing request (CSI ShareReq) frame to a shared AP associated with STA 200 that has transmitted the CSI.
(B2) Upon receiving the CSI sharing request frame, the shared AP transmits a CSI sharing frame.

Note that a channel use period called TXOP may be configured in the MAP NDPA frame, which is an exemplary trigger to start CSI measurement, for example, and the CSI sharing phase including the above control steps (A2) and (B2) may be configured in the TXOP.

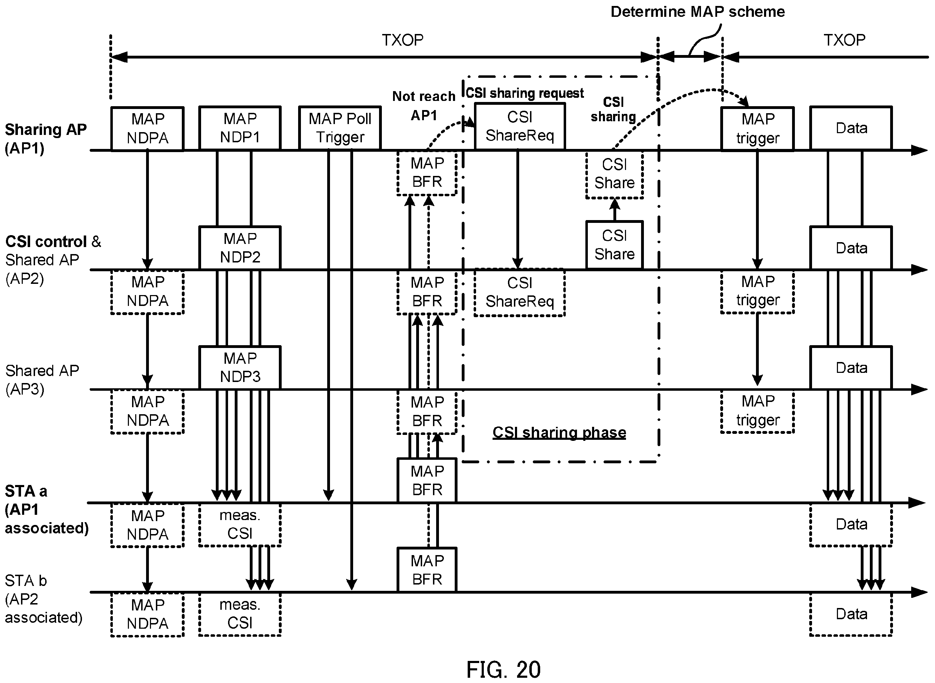

FIG. 20 illustrates an exemplary control sequence of MAP (i.e., control sequence for CSI measurement and feedback) according to the present embodiment.

Note that, as is the case with FIG. 3, FIG. 20 illustrates an exemplary control sequence of MAP in the communication environment illustrated in FIG. 2. For example, FIG. 20 illustrates an example regarding CSI for MAP NDP transmitted from the sharing AP (AP 1) and shared APs (AP 2 and AP 3), in which CSI from STA b does not reach the sharing AP (AP 1).

For example, in the control step (A2), the sharing AP (AP 1) that has received no CSI from STA b may transmit a CSI sharing request frame to the shared AP (AP 2) associated with STA b.

In the control step (B2), the shared AP (AP 2) that has received the CSI sharing request frame may transmit a CSI sharing frame to the sharing AP (AP 1).

Note that the CSI sharing phase need not be implemented when the shared APs successfully receive CSI by MAP BFR (i.e., when there is no shared AP that has received no CSI).

The shared AP (AP 2) that has received the CSI sharing request frame from the sharing AP (AP 1) may transmit the CSI sharing frame to the sharing AP (AP 1) based on the CSI sharing request frame, for example.

As described above, in the example illustrated in FIG. 20, the shared AP (AP 2) associated with STA b transmits the CSI sharing frame to the sharing AP (AP 1) that has received no CSI to indicate the CSI from STA b. This allows AP 1 and AP 2 to share the CSI from STA b.

As described above, in the present embodiment, the CSI sharing control is performed by the individual request for CSI sharing by AP 100 that receives no CSI. This control allows the sharing AP and shared AP to share CSI information from STAs 200 under the MAP, thereby achieving appropriate coordinated communication control in the MAP.

Further, in the present embodiment, for example, the control steps regarding the configuration of the CSI control AP and the CSI request to the CSI control AP need not be performed (i.e., can be omitted) as compared with Embodiment 1, thereby reducing the overhead related to the CSI sharing control.

Next, exemplary configurations of frames used in the above control steps (A2) and (B2) will be described.

### <CSI Sharing Request Frame (Control Step (A2))>

Similar to the CSI sharing request frame in the control step (B1) in Embodiment 1, for example, the CSI sharing request frame used in the control step (A2) may be configured to include at least one address field of AP 100 involved in the CSI sharing (e.g., sharing AP or shared AP of CSI sharing request destination; AP 2 in the example of FIG. 20).

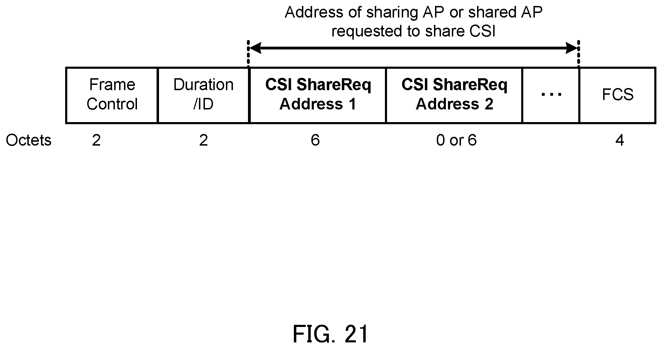

FIG. 21 illustrates an exemplary configuration of the CSI sharing request (CSI ShareReq) frame.

As illustrated in FIG. 21, the CSI sharing request frame may include, for example, at least one address (e.g., CSI ShareReq Address) of the sharing AP or shared AP of a CSI request destination (e.g., AP to which CSI sharing is requested). Note that the address (CSI ShareReq Address) may be shared in the MAP NDPA frame, which is an example of a trigger to start CSI measurement, for example, or may be shared in a phase for performing a process (e.g., setup for MAP or channel estimation) prior in time to the MAP NDPA frame.

The frame type specifying (or indicating) that the radio frame is the CSI sharing request frame may be based on at least one of the following definitions (or configurations), for example.
·Type value and subtype value in the frame control field
· New trigger type (trigger type subfield value)
· Specify the BFRP trigger frame format and provide the CSI Req (CSI request) subfield

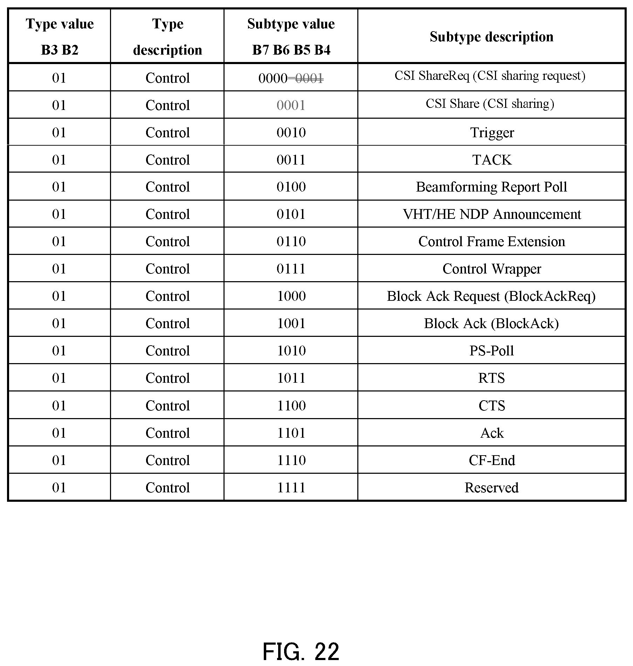

FIG. 22 illustrates an example in which the frame type is specified by the type value and the subtype value in the frame control field of the CSI sharing request frame illustrated in FIG. 21. In FIG. 22, the type of CSI sharing request (CSI ShareReq) frame is exemplarily defined by "0000", which is an undefined subtype value (e.g., reserved) in 11ax (e.g., control type of Table 9-1 Valid type and subtype combinations of 11ax specification). Note that FIG. 22 illustrates the example in which the type of CSI sharing request frame is defined by "0000", but the present disclosure is not limited thereto, and the frame type may be defined by another undefined value.

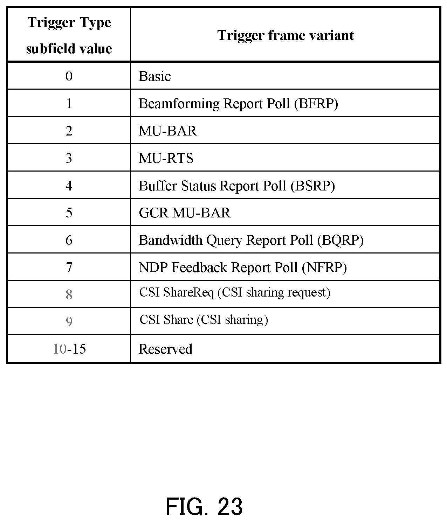

FIG. 23 illustrates an example of specifying the type of CSI sharing request frame by a new trigger type (trigger type subfield value). In FIG. 23, the type of CSI sharing request (CSI ShareReq) frame is exemplarily defined by "8", which is an undefined trigger type subfield value (e.g., reserved) in 11ax (e.g., control type of Table 9-29c Trigger Type subfield encoding of 11ax specification). Note that FIG. 23 illustrates the example in which the type of CSI sharing request frame is defined by "8", but the present disclosure is not limited thereto, and the frame type may be defined by another undefined value.

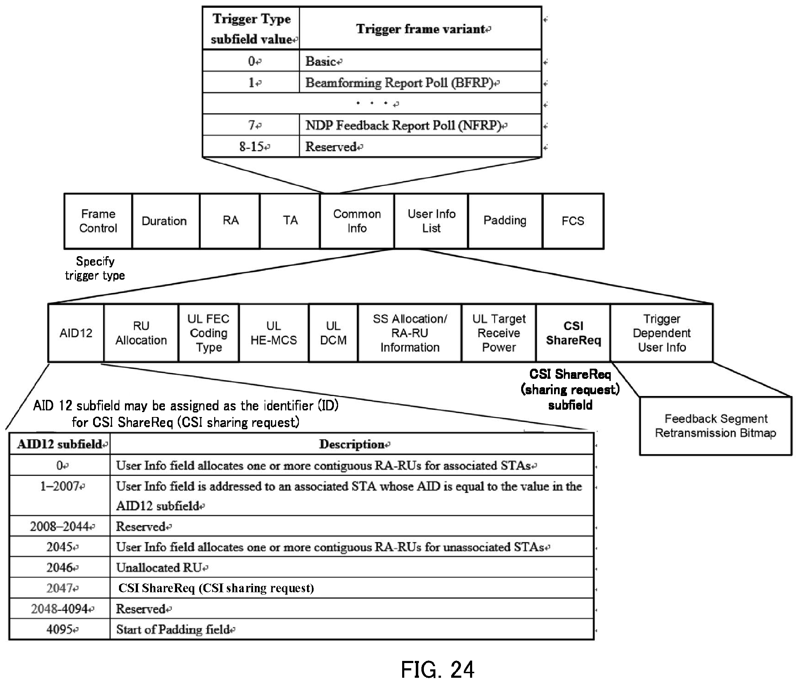

FIG. 24 illustrates an example of specifying the type of CSI sharing request frame by specifying the BFRP trigger frame format and providing the CSI Req (CSI request) subfield. FIG. 24 illustrates an example of specifying the BFRP trigger frame format by the trigger type and providing the CSI ShareReq (CSI sharing request) subfield in user information (Use Info List) of the frame. This CSI ShareReq (CSI sharing request) subfield may indicate, for example, the presence or absence of a CSI sharing request. Alternatively, the AID 12 subfield may be assigned as the identifier (ID) for CSI ShareReq (CSI sharing request) as illustrated in FIG. 24.

### <CSI Sharing Frame (Control Step (B2))>

Similar to the CSI sharing frame in the control step (C1) in Embodiment 1, for example, the CSI sharing frame used in the control step (B2) may be configured to include CSI information.

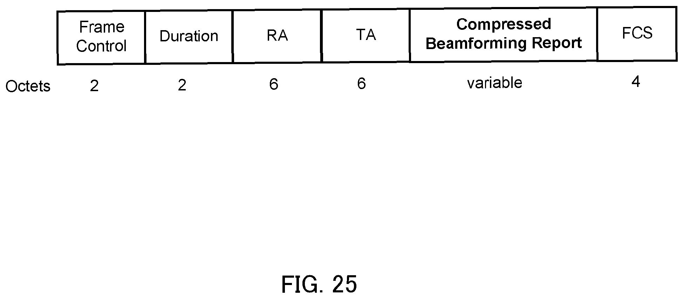

FIG. 25 illustrates an exemplary configuration of the CSI sharing (CSI Share) frame.

The compressed beamforming report field included in the CSI sharing frame illustrated in FIG. 25 may include, for example, the HE/EHT compressed beamforming report field.

The frame type specifying (or indicating) that the radio frame is the CSI sharing frame may be based on at least one of the following definitions (or configurations), for example.
· Type value and subtype value in the frame control field
· Newly define in action field values in the HE/EHT compressed beamforming/CQI frame or in a feedback type or an undefined (reserved) domain of the HE/EHT MIMO control field

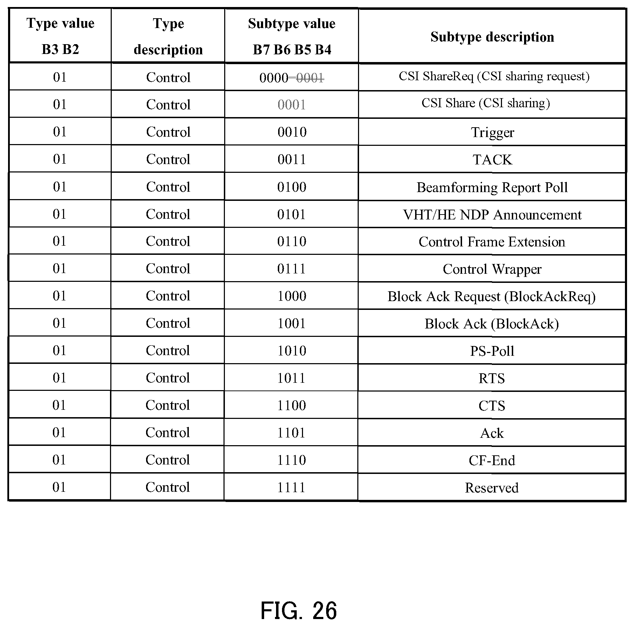

FIG. 26 illustrates an example in which the frame type is specified by the type value and the subtype value in the frame control field of the CSI sharing frame illustrated in FIG. 25. In FIG. 26, the type of CSI sharing (CSI Share) frame is exemplarily defined by "0001", which is an undefined subtype value (e.g., reserved) in 11ax (e.g., control type of Table 9-1 Valid type and subtype combinations of 11ax specification). Note that FIG. 26 illustrates the example in which the type of CSI sharing frame is defined by "0001", but the present disclosure is not limited thereto, and the frame type may be defined by another undefined value.

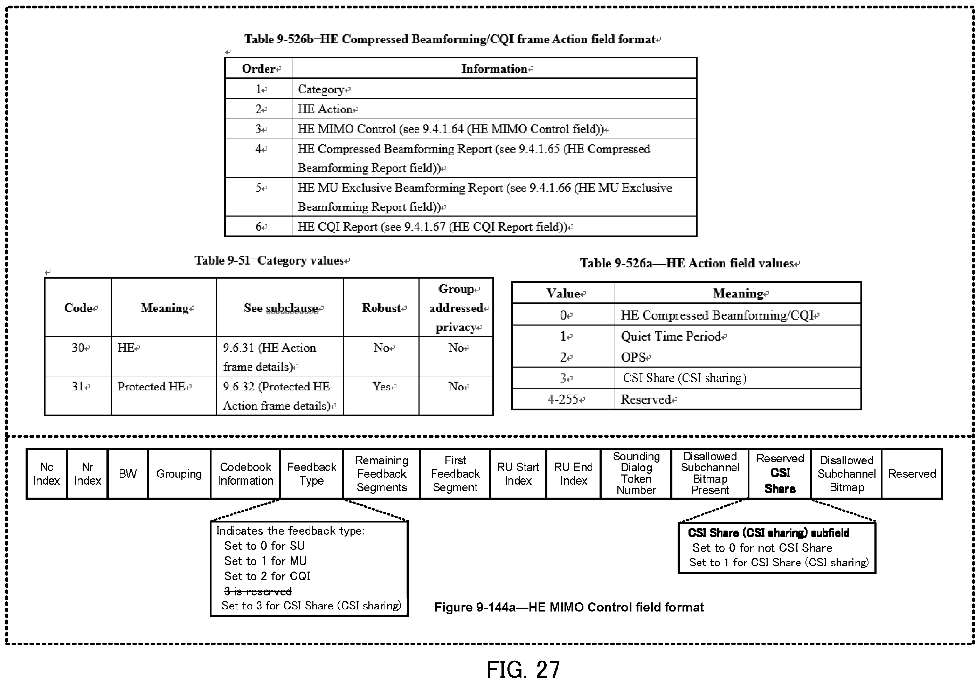

FIG. 27 illustrates an example of defining the type of CSI sharing frame in action field values in the HE/EHT compressed beamforming/CQI frame or newly defining the type of CSI sharing frame in a feedback type or an undefined (reserved) domain of the HE/EHT MIMO control field.

In FIG. 27, the type of CSI sharing (CSI Share) frame is exemplarily defined by "3" that is an undefined value (e.g., reserved) in 11ax (e.g., Table 9-526a HE Action field values of 11ax specification). Note that FIG. 27 illustrates the example in which the type of CSI sharing frame is defined by "3", but the present disclosure is not limited thereto, and the frame type may be defined by another undefined value (e.g., any of 4 to 255).

In addition, FIG. 27 indicates that the type of CSI sharing (CSI Share) frame may be defined by "3" that is an undefined value (e.g., reserved) of the feedback type in 11ax (e.g., Figure 9-144a MIMO Control field format of 11ax specification). FIG. 27 also illustrates an example in which a reserved field in 11ax (e.g., Figure 9-144a MIMO Control field format of 11ax specification) is newly defined as a CSI sharing subfield, indicating that it is a CSI sharing frame by "1" and that it is not a CSI sharing frame by "0".

Note that the configuration (or indication) of the type of CSI sharing frame illustrated in FIG. 27 is merely a non-liming example, and the configuration may be realized using other undefined values or undefined domains.

The exemplary configurations of frames used in the control steps (A2) and (B2) in Embodiment 2 have been described, thus far.

As described above, in Embodiment 2, AP 100 receives control information (radio frame) on sharing of CSI for a downlink signal in inter-base-station coordinated communication, and controls transmission of CSI to another AP 100 based on the received control information. For example, AP 100 determines transmission of CSI of STA 200 associated with the AP 100 to another AP 100 when the control information (e.g., CSI sharing request frame) received from the another AP 100 indicates a sharing request of the CSI.

This CSI sharing control allows a plurality of APs 100 (e.g., sharing AP and shared APs) to share CSI from STAs 200 under MAP. Even when AP 100 receives no CSI from STA 200, for example, AP 100 can obtain the CSI by CSI sharing from another AP 100, thereby enabling appropriate coordinated communication control. Thus, it is possible to, for example, optimize the throughput or quality of MAP coordinated communication and improve the quality of MAP coordinated communication.

### (Embodiment 3)

Next, Embodiment 3 will be described. The configurations of APs and STAs according to Embodiment 3 may be the same as in Embodiment 1.

In Embodiment 3, for example, a shared AP involved in CSI sharing may be specified in a MAP NDPA frame, which is an exemplary trigger to start CSI measurement.

For example, the following control steps (A3) and (B3) may be provided as a CSI sharing phase in a phase after the transmission process of the MAP NDPA frame and the MAP BFR (CSI feedback) from each STA 200.

(A3) Specify a combination of a shared AP that requests CSI sharing and an STA that transmits CSI by the MAP NDPA frame, which is an exemplary trigger to start CSI measurement.

(B3) A designated shared AP transmits a CSI sharing frame after the MAP BFR.

Note that a channel use period called TXOP may be configured in the MAP NDPA frame, which is an exemplary trigger to start CSI measurement, for example, and the CSI sharing phase including the above control step (B3) may be configured in the TXOP.

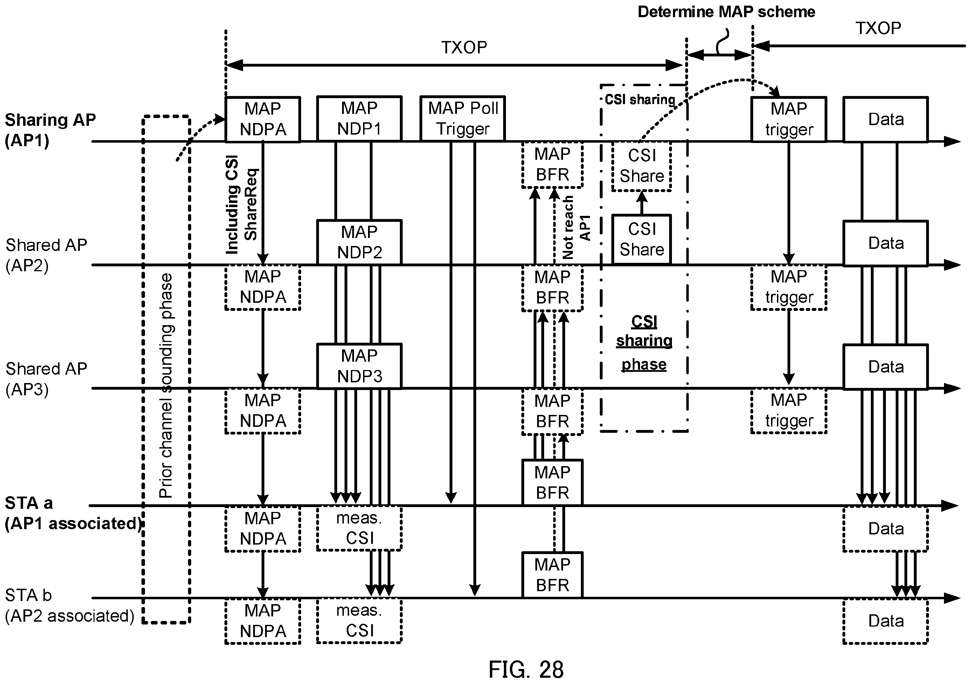

FIG. 28 illustrates an exemplary control sequence of MAP (i.e., control sequence for CSI measurement and feedback) according to Embodiment 3.

Note that, as is the case with FIG. 3, FIG. 28 illustrates an exemplary control sequence of MAP in the communication environment illustrated in FIG. 2. For example, FIG. 28 illustrates an example regarding CSI for MAP NDP transmitted from the sharing AP (AP 1) and shared APs (AP 2 and AP 3), in which CSI from STA b does not reach the sharing AP (AP 1).

For example, in the above control step (A3), the sharing AP (AP 1) may specify a combination of a shared AP that requests CSI sharing and an STA that transmits the CSI. In other words, the sharing AP (AP 1) may specify a combination of AP 100 that possibly fails to receive CSI from STA 200 and the STA 200.

For example, the sharing AP (AP 1) may determine the uplink coverage of each STA 200 based on a propagation loss or a channel estimate between each STA 200 and each shared AP collected in a multi-AP channel sounding phase. Then, the sharing AP (AP 1) may determine a combination of a shared AP present outside the uplink coverage of STA 200 and the STA 200, for example. In the example of FIG. 28, for example, a combination of STA b and AP 1 present outside the uplink coverage of STA b may be specified.

Note that the above-described specification of a combination may be updated periodically or non-periodically. This allows dynamic configuration (or change) of a combination of AP 100 and STA 200 depending on the propagation environment, for example, thereby enabling adaptive optimization of CSI sharing control.

Further, for example, in the control step (B3) described above, the shared AP (AP 2) specified in the MAP NDPA frame in the control step (A3) may transmit a CSI sharing frame to the sharing AP (AP 1) indicated in the combination.

As described above, in the example illustrated in FIG. 28, the shared AP (AP 2) to which the combination of AP 1 and STA b is specified transmits a CSI sharing frame to the sharing AP (AP 1) that receive no CSI from STA b, and indicates the CSI from STA b. This allows AP 1 and AP 2 to share the CSI from STA b.

As described above, in Embodiment 3, the CSI sharing control is performed by specifying a combination of AP 100 that receives no CSI and STA 200 in the MAP NDPA frame. This control allows the sharing AP and shared AP to share CSI information from STAs 200 under the MAP, thereby achieving appropriate coordinated communication control.

Further, Embodiment 3, for example, eliminates the control steps regarding the configuration of the CSI control AP and the CSI sharing request in the CSI sharing phase as compared with Embodiment 1 or 2, thereby reducing the overhead related to the CSI sharing control.

Next, exemplary configurations of frames used in the above control steps (A3) and (B3) will be described.

### <MAP NDPA Frame>

A MAP NDPA frame used in the control step (A3) may be configured to include, for example, information on STA 200 whose CSI is shared in an information field for each AP 100 (e.g., "Per AP Info").

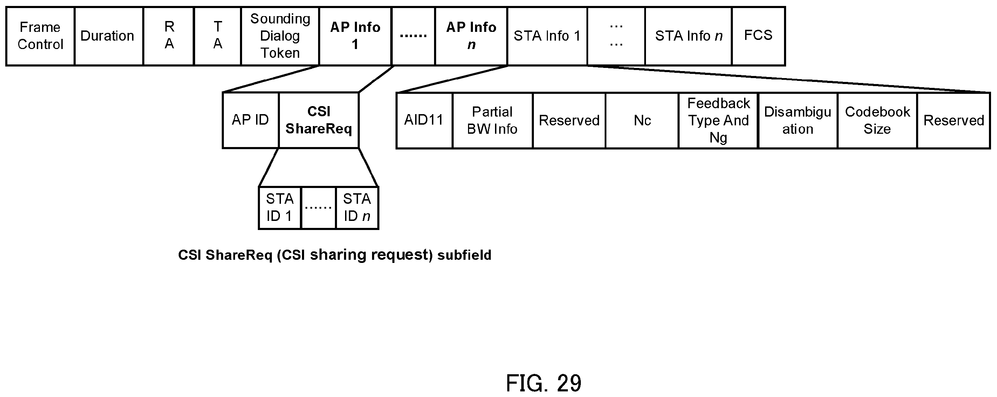

FIG. 29 illustrates example 1 in which the MAP NDPA frame includes a CSI sharing request (CSI ShareReq).

In the example illustrated in FIG. 29, the CSI sharing request (CSI ShareReq) subfield may be provided in the information (AP info) field for each AP 100. This CSI sharing request subfield may be configured with at least one identifier of STA 200 (STA ID) involved in CSI sharing.

For example, in the example illustrated in FIG. 29, the ID of STA b may be configured in the CSI sharing request subfield in the AP info 1 field corresponding to the sharing AP (AP 1).

Note that a MAC address (e.g., 48 bits) may be used for the STA ID, or an identifier of STA called a short ID may be defined. The short ID may be defined by being included in, for example, an association ID (AID) specified in 11ax specification, or may be assigned to the Reserved of AID 12. The use of a short ID reduces overhead compared to the case of using a MAC address.

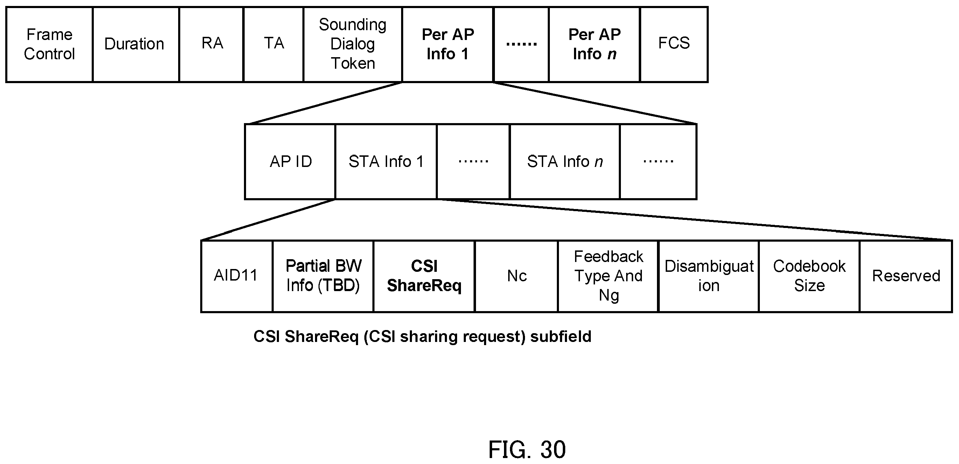

FIG. 30 illustrates example 2 in which the MAP NDPA frame includes a CSI sharing request (CSI ShareReq).

As illustrated in FIG. 30, the CSI sharing request (CSI ShareReq) subfield may be provided in the information (STA info) field for each STA 200 in the MAP NDPA frame. This CSI sharing request subfield may be configured with information indicating whether to request CSI sharing (e.g., CSI sharing request flag). The CSI sharing request flag may be, for example, information of 1 bit.

For example, in the example illustrated in FIG. 28, the CSI sharing request flag may indicate that the CSI sharing request is enabled, in the per STA info 1 field corresponding to STA b in the per AP info 1 field corresponding to the sharing AP (AP 1).

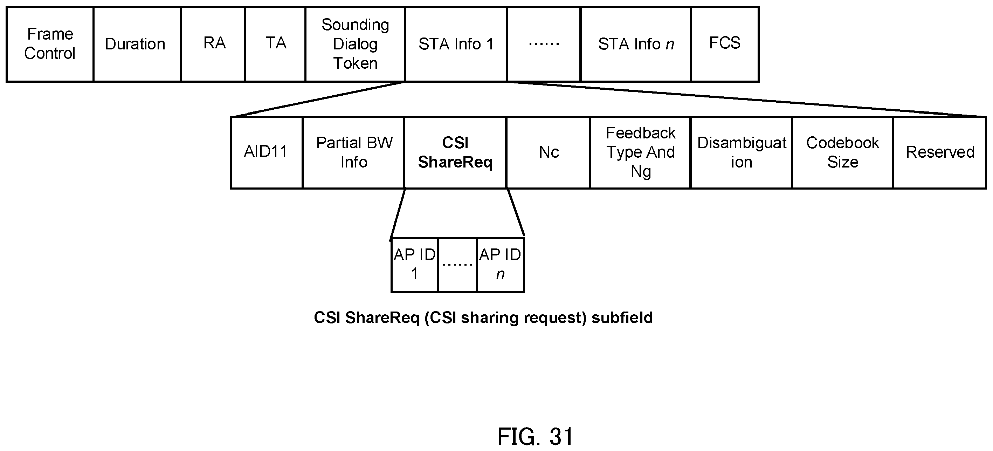

FIG. 31 illustrates example 3 in which the MAP NDPA frame includes a CSI sharing request (CSI ShareReq).

FIG. 31 illustrates an example in which the MAP NDPA frame is provided with the CSI sharing request (CSI ShareReq) subfield in the information (STA info) for each STA 200, and the ID of AP 100 involved in CSI sharing is configured in the CSI sharing request subfield. This frame configuration is an example of defining information indicating the presence or absence of a CSI sharing request in an undefined domain (reserved) of an HE NDPA frame, so that an existing frame type can be used.

Note that, although FIG. 29 to FIG. 31 illustrate examples in which the CSI sharing request (CSI ShareReq) subfield is provided in the MAP NDPA frame, the information indicating the presence or absence of a CSI sharing request may be similarly defined in the MAP poll trigger frame instructing the feedback of CSI measured by each STA 200.

### <CSI Sharing Frame (Control Step (B3))>

Similar to the CSI sharing frame in the control step (C1) in Embodiment 1, for example, the CSI sharing frame used in the control step (B3) may be configured to include CSI information.

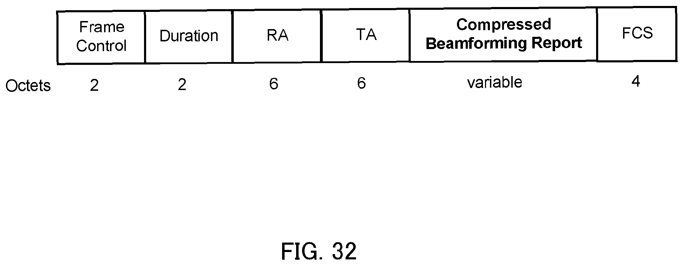

FIG. 32 illustrates an exemplary configuration of the CSI sharing (CSI Share) frame. In FIG. 32, the compressed beamforming report field may include, for example, the HE/EHT compressed beamforming report field.

The frame type specifying (or indicating) that the radio frame is the CSI sharing frame may be based on at least one of the following definitions (or configurations), for example.
·Type value and subtype value in the frame control field
· Newly define in action field values in the HE/EHT compressed beamforming/CQI frame or in a feedback type or an undefined (reserved) domain of the HE/EHT MIMO control field

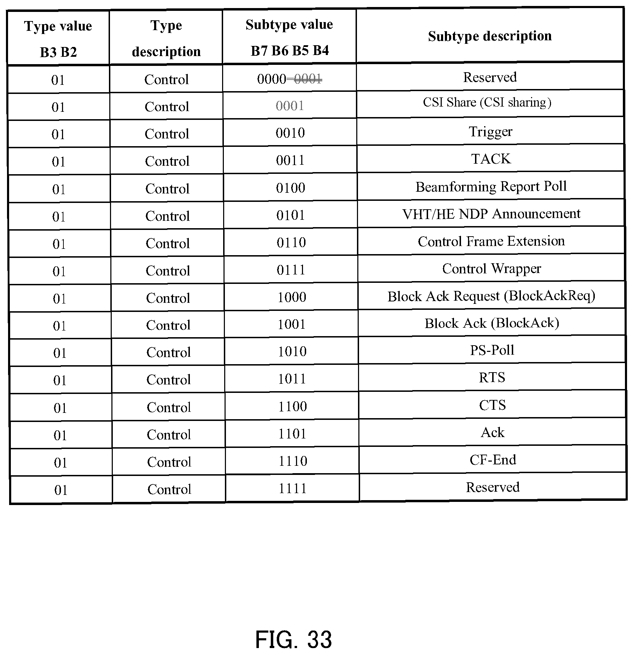

FIG. 33 illustrates an example in which the frame type is specified by the type value and the subtype value in the frame control field of the CSI sharing frame illustrated in FIG. 32. In FIG. 33, the type of CSI sharing (CSI Share) frame is exemplarily defined by "0001", which is an undefined subtype value (e.g., reserved) in 11ax (e.g., control type of Table 9-1 Valid type and subtype combinations of 11ax specification). Note that FIG. 33 illustrates the example in which the type of CSI sharing frame is defined by "0001", but the present disclosure is not limited thereto, and the frame type may be defined by another undefined value.

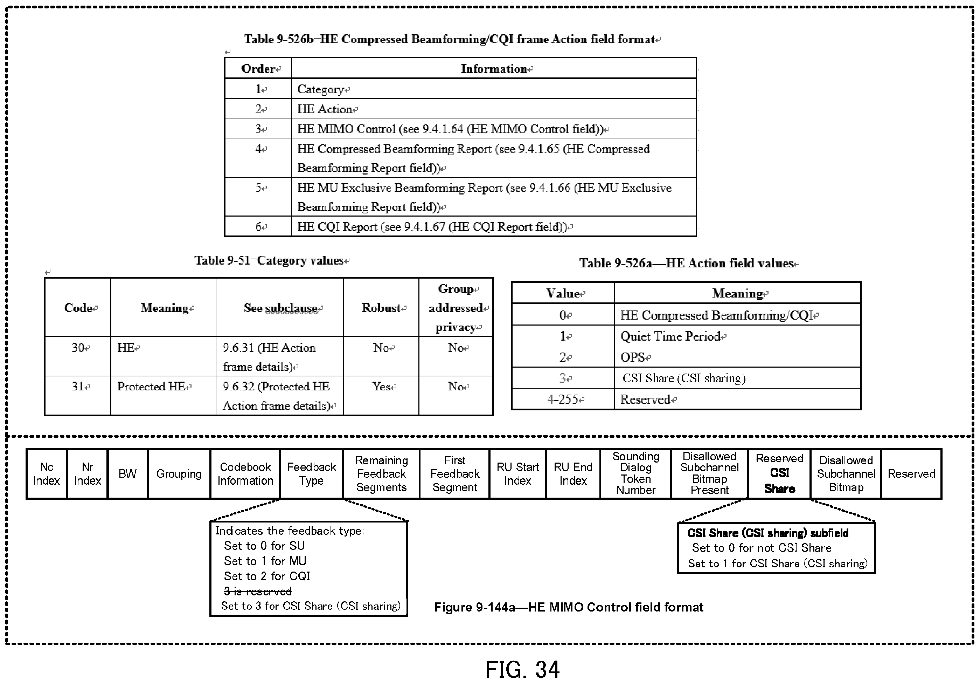

FIG. 34 illustrates a case of defining that it is a CSI sharing frame in an undefined (reserved) domain of the HE/EHT compressed beamforming/CQI frame. As in the example of FIG. 27, FIG. 34 is an example of defining the type of CSI sharing frame by any of the following definitions.
· Undefined value of HE action field values (e.g., "3")
· Undefined value of the feedback type in the HE MIMO control field (e.g., "3")
· Newly define in an undefined subfield in the HE MIMO control field

In FIG. 34, the type of CSI sharing (CSI Share) frame is exemplarily defined by "3" that is an undefined value (e.g., reserved) in 11ax (e.g., Table 9-526a HE Action field values of 11ax specification). Note that FIG. 34 illustrates the example in which the type of CSI sharing frame is defined by "3", but the present disclosure is not limited thereto, and the frame type may be defined by another undefined value (e.g., any of 4 to 255).

In addition, FIG. 34 indicates that the type of CSI sharing (CSI Share) frame may be defined by "3" that is an undefined value (e.g., reserved) of the feedback type in 11ax (e.g., Figure 9-144a MIMO Control field format of 11ax specification). FIG. 34 also illustrates an example in which a reserved field in 11ax (e.g., Figure 9-144a MIMO Control field format of 11ax specification) is newly defined as a CSI sharing subfield, indicating that it is a CSI sharing frame by "1" and that it is not a CSI sharing frame by "0".

Note that the configuration (or indication) of the type of CSI sharing frame illustrated in FIG. 34 is merely a non-liming example, and the configuration may be realized using other undefined values or undefined domains.

The exemplary configurations of frames used in the control steps (A3) and (B3) have been described, thus far.

As described above, in Embodiment 3, AP 100 receives control information (radio frame) on sharing of CSI for a downlink signal in coordinated communication, and controls transmission of CSI to another AP 100 based on the received control information. For example, when the received control information (e.g., MAP NDPA frame) indicates a combination of another AP 100 that receives no CSI among APs 100 involved in the coordinated communication and source STA 200 of the CSI, AP 100 determines transmission of the CSI from the source STA 200 to the another AP 100.

This CSI sharing control allows a plurality of APs 100 (e.g., sharing AP and shared APs) to share CSI from STAs 200 under MAP. Even when AP 100 receives no CSI from STA 200, for example, AP 100 can obtain the CSI by CSI sharing from another AP 100. Thus, it is possible to perform appropriate MAP coordinated communication, thereby improving the quality of MAP coordinated communication.

### (Embodiment 4)

Next, Embodiment 4 will be described. The configurations of APs and STAs according to Embodiment 4 may be the same as in Embodiment 1.

In Embodiment 4, for example, each shared AP may transmit a CSI sharing frame regardless of the reception state of CSI in each shared AP.

For example, the following control steps (A4) and (B4) may be provided as a CSI sharing phase in a phase after the process of the MAP NDPA frame and the MAP BFR (CSI feedback) transmitted by each STA 200.

(A4) The sharing AP indicates CSI sharing to a plurality of shared APs (e.g., all shared APs) using the MAP NDPA frame, which is an exemplary trigger to start CSI measurement.

(B4) The shared APs transmit CSI sharing frames after receiving MAP BFR from STAs 200.

Note that a channel use period called TXOP may be configured in the MAP NDPA frame, which is an exemplary trigger to start CSI measurement, for example, and the CSI sharing phase including the above control step (B4) may be configured in the TXOP.

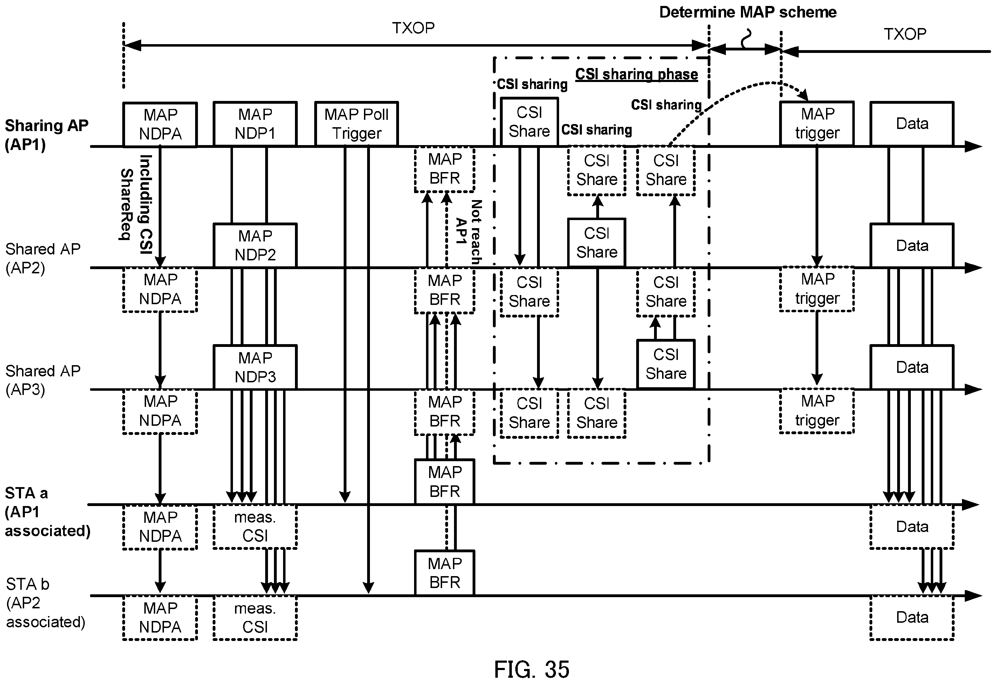

FIG. 35 illustrates an exemplary control sequence of MAP (i.e., control sequence for CSI measurement and feedback) according to Embodiment 4.

Note that, as is the case with FIG. 3, FIG. 35 illustrates an exemplary control sequence of MAP in the communication environment illustrated in FIG. 2. For example, FIG. 35 illustrates an example regarding CSI for MAP NDP transmitted from the sharing AP (AP 1) and shared APs (AP 2 and AP 3), in which CSI from STA b does not reach the sharing AP (AP 1).

For example, in the above control step (A4), the sharing AP (AP 1) may configure information indicating (or requesting) CSI sharing to a plurality of shared APs (AP 2 and AP 3). The information indicating CSI sharing may be, for example, a 1-bit CSI sharing request flag (CSI ShareReqFlag). For example, when the CSI sharing request flag is set to enable (e.g., when CSI sharing is indicated), the shared APs may operate assuming that the CSI sharing phase of the control step (B4) is configured. Meanwhile, when the CSI sharing request flag is set to disable (e.g., when CSI sharing is not indicated), the shared APs may operate assuming that the CSI sharing phase of the control step (B4) is not configured.

In addition, the shared AP (AP 1) may specify a multiplexing scheme for transmitting the CSI sharing frames in the control step (B4). Exemplary schemes for multiplexing the CSI sharing frames include time division multiplexing (TDMA: time division multiple access), frequency division multiplexing (e.g., OFDMA: orthogonal frequency division multiple access), and spatial division multiplexing (e.g., MU-MIMO: multi user-multiple input multiple output).

In the control step (B4), the shared APs may transmit the CSI sharing frames according to the multiplexing scheme specified in the MAP NDPA frame in the control step (A4). FIG. 35 illustrates an example in which the CSI sharing frames are transmitted by TDMA.

As described above, in the example illustrated in FIG. 35, a plurality of shared APs (AP 1, AP 2, and AP 3) indicated to share CSI by the MAP NDPA frame respectively transmit the CSI sharing frames. Thus, for example, the shared APs (AP 2 and AP 3) indicate the CSI of STA b to the sharing AP (AP 1) that receives no CSI from STA b. This allows AP 1, AP 2, and AP 3 to share the CSI from STA b.

As described above, in Embodiment 4, control of indicating CSI sharing to a plurality of APs 100 is performed using the MAP NDPA frame. This control allows the sharing AP and shared APs to share CSI information from STAs 200 under the MAP, thereby achieving appropriate coordinated communication control.

Further, Embodiment 4, for example, eliminates the control steps regarding the configuration of the CSI control AP and the CSI sharing request in the CSI sharing phase as compared with Embodiment 1 or 2, thereby reducing the overhead related to the CSI sharing control.

Next, exemplary configurations of frames used in the above control steps (A4) and (B4) will be described.

### <MAP NDPA Frame>

The MAP NDPA frame used in the control step (A4) may be configured to include, for example, information indicating CSI sharing to a plurality of APs 100 (e.g., all shared APs).

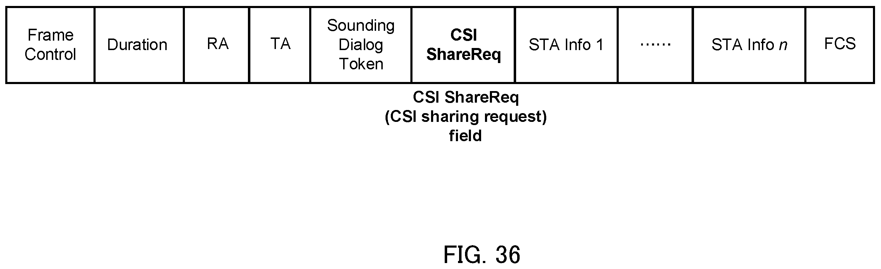

FIG. 36 illustrates an exemplary configuration of the MAP NDPA frame.

FIG. 36 illustrates an example in which a CSI sharing request (CSI ShareReq) field for indicating CSI sharing to a plurality of shared APs is provided in an information (common info) field common to a plurality of APs 100. The CSI sharing request field may be, for example, a new field or may be assigned to an undefined bit in an existing field, such as the sounding dialog token field.

Note that, although FIG. 36 illustrates an example of providing the CSI sharing request (CSI ShareReq) field in the MAP NDPA frame, a field or bit value for requesting CSI sharing may be similarly defined in a signal (e.g., MAP poll trigger frame) indicating the feedback of CSI measured by each STA 200.

### <CSI Sharing Frame (Control Step (B4))>

Similar to the CSI sharing frame in the control step (C1) in Embodiment 1, for example, the CSI sharing frame used in the control step (B4) may be configured to include CSI information. In addition, an exemplary configuration of the CSI sharing frame and an exemplary specification of the frame type may be the same as, for example, those of the CSI sharing frame in Embodiment 3.

As described above, in Embodiment 4, AP 100 receives control information (e.g., radio frame) on sharing of CSI for a downlink signal in coordinated communication, and controls transmission of CSI to another AP 100 based on the received control information. For example, when the received control information (e.g., MAP NDPA frame) indicates CSI sharing, AP 100 determines transmission of CSI to APs 100 involved in the coordinated communication.

This CSI sharing control allows a plurality of APs 100 (e.g., sharing AP and shared APs) to share CSI from STAs 200 under MAP. Even when AP 100 receives no CSI from STA 200, for example, AP 100 can obtain the CSI by CSI sharing from another AP 100. Thus, it is possible to perform appropriate MAP coordinated communication control, thereby improving the quality of MAP coordinated communication.

### (Embodiment 5)

Next, Embodiment 5 will be described. The configurations of APs and STAs according to Embodiment 5 may be the same as in Embodiment 1.

In Embodiment 5, for example, whether to share CSI between shared APs may be determined depending on the type of line (e.g., wireless or wired) between the shared APs.

Information determined by AP 100 (e.g., sharing AP) on the sharing configuration and the transmission may be at least one of the following, for example.
· CSI sharing request frame according to Embodiment 1 or 2
· Information on a combination of AP 100 and STA 200 involved in CSI sharing according to Embodiment 3
· Information on CSI sharing in a plurality of shared APs according to Embodiment 4

Exemplary indication methods for information indicating whether to use a wired line or a wireless line includes a method of indicating the information by a frame including the following signaling.
a) Information on a combination performing CSI sharing on a wireless line (or not performing CSI sharing on a wired line)
b) Information on a combination performing CSI sharing on a wired line (or not performing CSI sharing on a wireless line)
c) Information with the above a) and b) combined
d) Information (e.g., flag) indicating whether the sharing method is wireless or wired for each shared AP

Note that AP 100 may obtain information on the line type between shared APs, for example, in a multi-AP channel sounding phase or in another period.

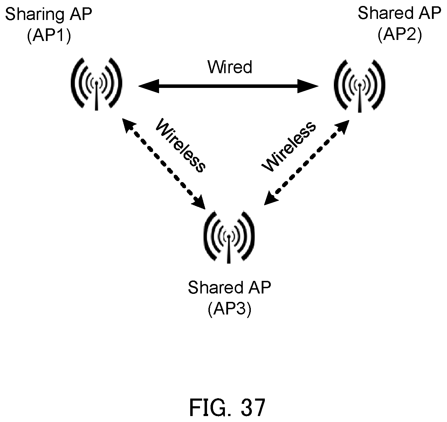

FIG. 37 illustrates an exemplary line configuration between shared APs. FIG. 37 illustrates an example in which the sharing AP (AP 1) and shared AP (AP 2) are connected to each other by a wired line, the sharing AP (AP1) and shared AP (AP 3) are connected to each other by a wireless line, and the shared AP (AP 2) and shared AP (AP 3) are connected to each other by a wireless line.

For example, when a relay line between the shared APs (e.g., between AP 1 and AP 2 in FIG. 37) is in an ideal communication environment (e.g., wired line with low latency such as Ethernet (registered trademark) or optical fiber), AP 100 may transmit at least one of a CSI sharing request frame and information on a combination of AP 100 and STA 200 involved in CSI sharing using a wired frame such as an Ethernet frame of IEEE 802.3, for example, instead of performing wireless transmission.

Meanwhile, for example, when a relay line between the shared APs (e.g., between AP 1 and AP 3 or between AP 2 and AP 3 in FIG. 37 ) is not in an ideal communication environment (e.g., line likely to have higher latency than wired line, such as a wireless line), AP 100 may wirelessly transmit a MAP NDPA frame including a CSI sharing request frame and information on a combination of AP 100 and STA 200 involved in CSI sharing.

Further, in a relay line configuration with wired and wireless lines mixed (or used) together, AP 100 may transmit, for example, at least one of a CSI sharing request frame and information on a combination of AP 100 and STA 200 involved in CSI sharing using a MAP NDPA frame on a wireless line path and using a wired frame such as an Ethernet frame of IEEE 802.3 on a wired line path. Note that the frame transmitted in each of the wired line and the wireless line is not limited to the above-described example, and may be another frame.

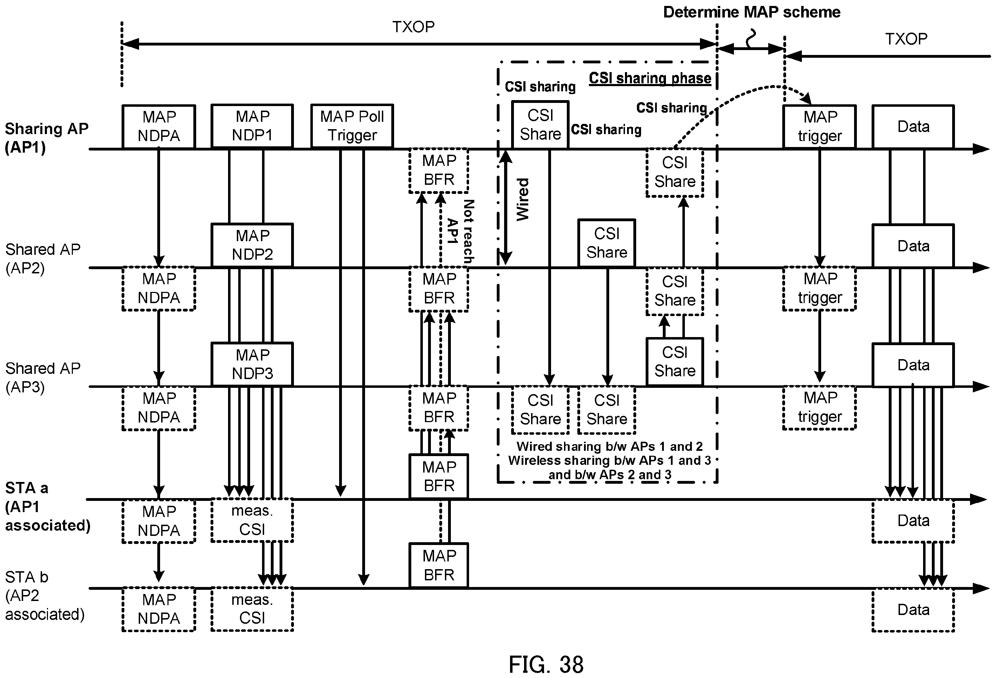

FIG. 38 illustrates an exemplary control sequence of MAP (i.e., control sequence for CSI measurement and feedback) according to Embodiment 5.

FIG. 38 illustrates an example in which the sharing AP (AP 1) and shared AP (AP 2) are connected to each other by a wired line, the sharing AP (AP1) and shared AP (AP 3) are connected to each other by a wireless line, and the shared AP (AP 2) and shared AP (AP 3) are connected to each other by a wireless line.

Further, FIG. 38 illustrates an example regarding CSI for the MAP NDPA frame transmitted from the sharing AP (AP 1) and shared APs (AP 2 and AP 3), in which CSI from STA b does not reach the sharing AP (AP 1). Note that the control sequence illustrated in FIG. 38 is an example of providing a CSI sharing phase as in Embodiment 4, in which each shared AP performs CSI sharing, without illustrating transmission and reception of CSI sharing frames between the sharing AP (AP 1) and shared AP (AP 2) which can be shared by a wired line.

For example, as illustrated in FIG. 38, at least one piece of information on CSI sharing may be transmitted in a wired frame and not transmitted wirelessly between the sharing AP (AP 1) and shared AP (AP 2) connectable to each other by a wired line. Further, in FIG. 38, the CSI sharing frame from the sharing AP (AP 1) to shared AP (AP 2) and the CSI sharing frame from the shared AP (AP 2) to sharing AP (AP 1) need not be transmitted.

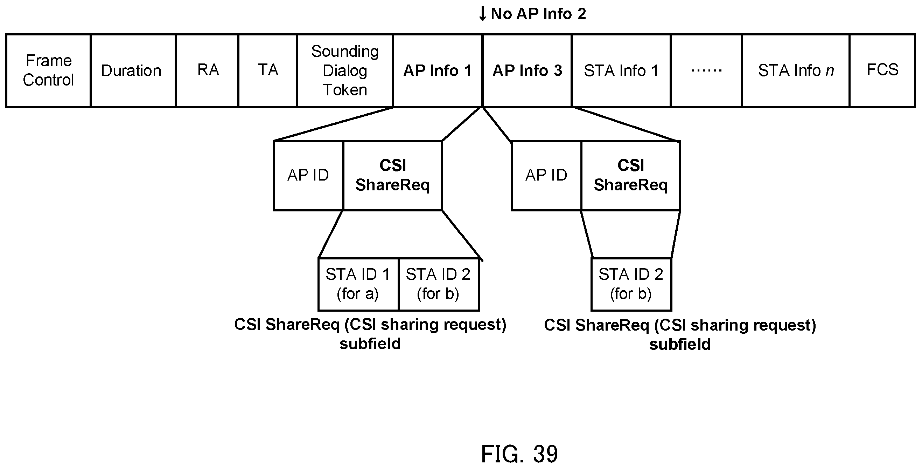

FIG. 39 illustrates an exemplary configuration of the MAP NDPA frame according to Embodiment 5. Since the sharing AP (AP 1) and shared AP (AP 2) are connected to each other by a wired line, CSI sharing on a wireless line is unnecessary between AP 1 and AP 2. Thus, as illustrated in FIG. 39, information of AP 2 need not be included as an element of a CSI sharing request, and information of AP 1 and AP 3 that possibly perform CSI sharing on a wireless line may be included.

According to Embodiment 5, AP 100 determines whether to share CSI with another AP (e.g., presence or absence of wireless CSI sharing request) based on the line type (e.g., wireless or wired) with the another AP 100. AP 100 can share CSI information of each STA 200 using both wired and wireless frames, thereby reducing the time for CSI sharing. It is thus possible to reduce the time required for appropriate coordinated communication to be implemented.

Note that, although FIG. 38 illustrates the control sequence based on the control sequence in Embodiment 4 by way of example, the present disclosure is not limited thereto, and the operation depending on the line type in Embodiment 5 may be applied in any of Embodiments 1 to 3.

Further, although Embodiment 5 provides an example in which CSI sharing is controlled depending on the line type between APs 100, such as wireless and wired, the present disclosure is not limited thereto, and for example, CSI sharing may be controlled depending on, for example, the communication performance (or communication scheme) between APs 100.

Embodiments of the present disclosure have been each described, thus far.

### (Other Embodiments)

The operations (e.g., control sequences) exemplified in the above-described embodiments may be selectively applied (i.e., switched), for example.

In the above embodiments, CSI is transmitted using the HE/EHT compressed beamforming report, but may be transmitted using any of the following signals or information, for example.
· HE/EHT MU Exclusive Beamforming Report
· CSI Report
· Noncompressed Beamforming Report

In the above embodiments, the information shared between APs 100 is CSI, but the information shared between APs 100 is not limited to CSI, and may be, for example, at least one of the following listed below in addition to CSI or in place of CSI.
· Acknowledgement from the each STA 200 (e.g., ACK or block ACK)
· Transmission buffer status of each STA 200: Buffer Status Report (BSR)
· Bandwidth occupancy: Bandwidth (BW) Query Report (BQR)
· Information from each STA 200 other than channel sounding: NDP Feedback Report (NFR)
· Information used for link adaptation

Note that examples of the information used for link adaptation include information or parameters such as MCS, dual sub-carrier modulation (DCM), resource unit (RU) allocation, BW, number of spatial streams (NSS), and transmission beamforming (Tx beamforming). The type of the block ACK may be any type of immediate block Ack and delayed block Ack.

For example, one or a combination of two or more of CSI, ACK or block ACK, BSR, BQR, NFR, and the information used for link adaptation may be subject to sharing control between APs. In a radio frame format, individual definitions may be assigned to information elements of a combination of two or more, or a common definition may be assigned to such information elements. Adopting a common definition reduces the probability of exhaustion of resources such as undefined fields or undefined values that can be assigned to information elements related to sharing control, for example.

In addition, an individual signal (e.g., frame) format may be defined for each of the above information, or a signal (e.g., frame) format (e.g., MAP sharing frame) that handles at least a part of each information uniformly (or commonly) may be defined. In this MAP sharing frame, for example, individual variants may be defined for respective information elements.

In the above embodiments, CSI to be shared is CSI for CSI measurement by MAP NDP and the feedback, but the CSI to be shared may also be CSI for CSI measurement during MAP data frame reception and the feedback.

The presence or absence of CSI sharing control may be controlled by a MAP coordination scheme. For example, when the MAP coordination scheme is JT or CBF, AP 100 may perform CSI sharing control for CSI collection by a coordination AP, and when the MAP coordination scheme is not JT or CBF, AP 100 need not perform CSI sharing control.

In addition, the definitions of information on CSI sharing in the frame control field, trigger type, and variants described in the above embodiments are merely non-limiting examples, and other values may be defined.

Further, the configurations of the CSI request frame, CSI sharing request frame, CSI sharing frame, and MAP NDPA frame described in the above embodiments are merely non-limiting examples, and other configurations may be used. For example, in those frame configurations, some fields need not be configured, and another field may be further configured.

In the above embodiment, AP indicating coordinated communication and AP to which coordinated communication is indicated have been described by the terms "sharing AP" and "shared AP" respectively, but the present disclosure is not limited thereto, and other terms may be used.

The above embodiments have been described based on the format of 11be as a non-limiting example, but the format to which an embodiment of the present disclosure can be applied is not limited to the format of 11be. An embodiment of the present disclosure may be applied to, for example, IEEE 802.11bd (next generation V2X (NGV)), which is a next generation of the IEEE 802.11p standard designed for automotive applications.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas. Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

A base station according to an embodiment of the present disclosure may include: reception circuitry, which, in operation, receives control information on sharing of channel state information in inter-base-station coordinated communication; and control circuitry, which, in operation, controls transmission of the channel state information to another base station based on the control information.

In an embodiment of the present disclosure, when the control information indicates a request for the channel state information, the control circuitry may instruct a base station other than the another base station among base stations involved in the inter-base-station coordinated communication to transmit the channel state information to the another base station.

In an embodiment of the present disclosure, when the control information indicates a request for the sharing of the channel state information, the control circuitry may determine the transmission of the channel state information to the another base station indicated in the control information.

In an embodiment of the present disclosure, when the control information indicates a request for the sharing of the channel state information related to a terminal associated with the base station, the control circuitry may determine the transmission of the channel state information to the another base station.

In an embodiment of the present disclosure, when the control information indicates a combination of the another base station that does not receive the channel state information among base stations involved in the inter-base-station coordinated communication and a source of the channel state information, the control circuitry may determine the transmission, to the another base station, of the channel state information from the source.

In an embodiment of the present disclosure, the control information may be included in a signal that triggers a start of measurement of the channel state information.

In an embodiment of the present disclosure, when the control information indicates the sharing of channel state information, the control circuitry may determine the transmission of the channel state information to a base station involved in the inter-base-station coordinated communication.

In an embodiment of the present disclosure, the control information may be included in a signal that triggers a start of measurement of the channel state information.

In an embodiment of the present disclosure, the control circuitry may determine whether to share the channel state information with the another base station based on a line type with the another base station.

In an embodiment of the present disclosure, the control circuitry may determine to share the channel state information when the line type is wireless, and determine not to share the channel state information when the line type is wired.

A communication method according to an embodiment of the present disclosure may include: receiving, by a base station, control information on sharing of channel state information in inter-base-station coordinated communication; and controlling, by the base station, transmission of the channel state information to another base station based on the control information.

The disclosure of Japanese Patent Application No. 2021-026256, filed on February 22, 2021, including the specification, drawings and abstract, is incorporated herein by reference in its entirety.

### Industrial Applicability

An exemplary embodiment of the present disclosure is useful for radio communication systems.

### Reference Signs List

100 AP
101 Controller
102 STA control-signal generator
103 AP control-signal generator
104, 203 Transmission signal generator
105, 201 Radio transceiver
106, 202 Received signal demodulator/decoder
200 STA

## Claims

1. A base station (100), comprising:
reception circuitry (106), which is configured to receive control information on sharing of channel state information in inter-base-station coordinated communication; and
control circuitry (101), which is configured to control transmission of the channel state information to another base station based on the control information,
**characterized in that**
when the control information indicates a combination of the another base station that does not receive the channel state information among base stations involved in the inter-base-station coordinated communication and a source of the channel state information, the control circuitry determines the transmission to the another base station, of the channel state information from the source

2. The base station according to claim 1, wherein, when the control information indicates a request for the sharing of the channel state information, the control circuitry determines the transmission of the channel state information to the another base station indicated in the control information.

3. The base station according to claim 1, wherein, when the control information indicates a request for the sharing of the channel state information related to a terminal associated with the base station, the control circuitry determines the transmission of the channel state information to the another base station.

4. The base station according to claim 3, wherein the control information is included in a signal that triggers a start of measurement of the channel state information.

5. The base station according to claim 1, wherein, when the control information indicates the sharing of channel state information, the control circuitry determines the transmission of the channel state information to a base station involved in the inter-base-station coordinated communication.

6. The base station according to claim 5, wherein the control information is included in a signal that triggers a start of measurement of the channel state information.

7. The base station according to claim 1, wherein the control circuitry determines whether to share the channel state information with the another base station based on a line type, which is wired or wireless, with the another base station.

8. The base station according to claim 7, wherein the control circuitry determines to share the channel state information when the line type is wireless, and determines not to share the channel state information when the line type is wired.

9. A communication method, comprising:
receiving, by a base station (100), control information on sharing of channel state information in inter-base-station coordinated communication; and
controlling, by the base station, transmission of the channel state information to another base station based on the control information,
**characterized in that**
when the control information indicates a combination of the another base station that does not receive the channel state information among base stations involved in the inter-base-station coordinated communication and a source of the channel state information, determining, by the base station, the transmission to the another base station, of the channel state information from the source.
